# EUROPEAN PATENT APPLICATION

(11) **EP 4 790 621 A2**
(43) Date of publication of application: **12.08.2026**
(21) Application number: 26151890.6
(22) Date of filing: 14.01.2026
(51) Int. Cl.: G06Q 10/20, G06Q 10/087, G06Q 10/0631

(54) **SYSTEM FOR FACILITATING VEHICLE DIAGNOSTICS, SCHEDULING, & PART SOURCING AND RELATED METHODS**

(30) Priority: 15.01.2025 US 202563745636 P
(71) Applicant: Genuine Parts Company, Atlanta, GA 30339 (US)
(72) Inventor: Ellsworth, Jonathan Lowell, Marietta, GA, 30068 (US); Goodhew, Karl David, Tucker, GA, 30084 (US); Krishna, Naveen, Atlanta, GA, 30327 (US)
(74) Representative: Brand Murray Fuller LLP

(57) **Abstract**

A system can include one or more processors and one or more non-transitory computer-readable media storing computing instructions that, when executed on the one or more processors, cause the one or more processors to perform operations. The operations can include receiving a service request for a vehicle. The operations further can include analyzing the vehicle. Analyzing the vehicle can include comparing the type of the vehicle and the condition of the vehicle to historical data to generate comparison information. The operations also can include generating a sourcing plan. Generating the sourcing plan can include identifying one or more vehicle parts used for the service request based at least on the comparison information and an automated sourcing function to source the one or more vehicle parts used for the service request. The operations further can include facilitating an order to obtain the one or more vehicle parts. Other embodiments are disclosed.

## Description

### CROSS-REFERENCE TO RELATED APPLICATION

This application claims the benefit of U.S. Provisional Application No. 63/745,636, filed January 15, 2025, which is incorporated herein by reference in its entirety.

### TECHNICAL FIELD

This disclosure is related to improved systems, methods, and techniques for vehicle scheduling, diagnostics, and part sourcing. In certain embodiments, vehicle service locations are connected as edge nodes to a vehicle service platform over a network, and the vehicle service locations are integrated with artificial intelligence (AI) and/or Internet-of-Things (IoT) technologies to enhance vehicle diagnostics, service request scheduling, and part sourcing processes at the vehicle service locations. The technologies described herein can be executed to minimize downtime in vehicle service environments, standardize services provided across vehicle service environments, automate parts ordering and sourcing with scheduling, and/or maximize the productivity of the vehicle service environments.

### BACKGROUND

In the field of vehicle diagnostics and servicing, optimization of a vehicle service site (e.g., vehicle maintenance and/or repair locations) is influenced by variables including the geographic location of the site, the customer demography, and the physical layout of the site. Implementation of effective and efficient services at scale in a vehicle service site environment is a complex process that involves utilization and management of various types of equipment and software (e.g., vehicle lifts, vehicle diagnostics software, bay scheduling software, etc.).

In modern times, vehicle owners have come to expect skilled technicians with fast turn-around times for servicing their vehicles. However, providing time-efficient service and with high expertise faces various technical challenges.

Some challenges can be attributed to handling specialized service requests. For example, certain types of service requests require specialized equipment (e.g., a service bay equipped with a vehicle lift) and specialized technicians to handle more intricate repairs (e.g., an engine repair or replacement). These specialized service requests typically require more attention and scheduling compared to more routine service requests.

Additional challenges can be attributed to the fact that many workflows implemented at traditional vehicle service sites are performed manually. For example, a vehicle service request typically begins with the manual scheduling of a vehicle for maintenance or repair. This manual scheduling process for a service request requires an individual to have domain knowledge that accounts for the complex nature of automotive service logistics, and often involves coordinating availability of service bays at the vehicle service site, allocating specific equipment or tools required for the request, ordering automotive parts and/or fluids necessary to complete the service request, scheduling technicians with required training, certifications, or skillsets based on their availability. Moreover, in many scenarios, a single service request may encompass a series of interconnected processes and scheduling tasks. These tasks may include performing an initial diagnostic test to identify the problem, allocating a service bay and assigning a qualified technician to address the issue, evaluating the vehicle post-repair to confirm problem resolution, and if necessary, rescheduling additional service areas and personnel for further repairs. This cycle of diagnosis, repair, and evaluation may continue iteratively until a problem or issue is fully resolved. Each phase of this process may require distinct scheduling and resource allocation at the vehicle service site, which is typically performed manually by an experienced technician located at the vehicle service site.

Some vehicle service sites utilize automotive diagnostic equipment and software to detect and/or diagnosis automotive problems corresponding to vehicles. In some examples, this automotive diagnostic equipment and software can interface with a vehicle's onboard diagnostic (OBD) system to access the vehicle's electronic control units (ECUs), retrieve diagnostic trouble codes (DTCs), and analyze sensor data to detect malfunctions or diagnose specific issues within the vehicle's various systems, including engine, transmission, brakes, and emissions control. While useful for rapidly detecting and/or identifying certain types of automotive issues, an individual still needs to manually identify parts that are compatible with the vehicle under inspection and manually source those parts from a supplier, which can be time-consuming and which can lead to reduced productivity.

This background description provided herein is for the purpose of generally presenting context of the disclosure. The materials described in this section are not prior art to the claims in this application and are not admitted to be prior art, or suggestions of the prior art, by inclusion in this section.

### BRIEF DESCRIPTION OF DRAWINGS

To facilitate further description of the embodiments, the following drawings are provided, in which like references are intended to refer to like or corresponding parts, and in which:
FIG. 1A is a diagram of an exemplary system for a vehicle service system in accordance with certain embodiments;
FIG. 1B is a block diagram illustrating exemplary components of a site controller application in accordance with certain embodiments;
FIG. 2 is a network diagram illustrating a centralized vehicle service cloud platform connected to a plurality of vehicle service sites in accordance with certain embodiments;
FIG. 3 is diagram illustrating an exemplary architecture of a vehicle service system in accordance with certain embodiments;
FIG. 4 is a diagram illustrating an exemplary vehicle site service environment in accordance with certain embodiments;
FIG. 5 is a block diagram illustrating exemplary components of an asset management system in accordance with certain embodiments;
FIG. 6 is a block diagram illustrating exemplary components of a scheduling system in accordance with certain embodiments;
FIG. 7 is a block diagram illustrating exemplary components of a vehicle diagnostic system in accordance with certain embodiments;
FIG. 8 is a flow diagram illustrating an exemplary method according to certain embodiments;
FIG. 9 is a flow diagram illustrating an exemplary method according to certain embodiments;
FIG. 10 is a flow diagram illustrating an exemplary method according to certain embodiments; and
FIG. 11 is a flow diagram illustrating an exemplary method according to certain embodiments.

The terms "first," "second," "third," "fourth," and the like in the description and in the claims, if any, are used for distinguishing between similar elements and not necessarily for describing a particular sequential or chronological order. It is to be understood that the terms so used are interchangeable under appropriate circumstances such that the embodiments described herein are, for example, capable of operation in sequences other than those illustrated or otherwise described herein.

The terms "left," "right," "front," "rear," "back," "top," "bottom," "over," "under," and the like in the description and in the claims, if any, are used for descriptive purposes and not necessarily for describing permanent relative positions. It is to be understood that the terms so used are interchangeable under appropriate circumstances such that the embodiments of the apparatus, methods, and/or articles of manufacture described herein are, for example, capable of operation in other orientations than those illustrated or otherwise described herein.

As used herein, "approximately" can, in some embodiments, mean within plus or minus ten percent of the stated value. In other embodiments, "approximately" can mean within plus or minus five percent of the stated value. In further embodiments, "approximately" can mean within plus or minus three percent of the stated value. In yet other embodiments, "approximately" can mean within plus or minus one percent of the stated value.

Certain data or functions may be described as "real-time," "near real-time," or "substantially real-time" within this disclosure. Any of these terms can refer to data or functions that are processed with a humanly imperceptible delay or minimal humanly perceptible delay. Alternatively, these terms can refer to data or functions that are processed within a specific time interval (e.g., in the order of milliseconds).

### DETAILED DESCRIPTION OF EXEMPLARY EMBODIMENTS

The present disclosure relates to systems, methods, apparatuses, computer program products, and techniques for improving operations at vehicle service sites. The techniques described herein can utilize artificial intelligence, IoT connectivity, and edge computing technologies to schedule service requests at vehicle service sites, enhance vehicle diagnostic processes, and automate part sourcing.

In certain aspects of this disclosure, an improved vehicle site service system offers several advantages and benefits over traditional systems. The improved vehicle site service system is designed to enhance efficiency and processing of service requests at vehicle service sites, reduce downtime at vehicle service sites, maximize utilization of service areas at vehicle service sites, and enhance coordination of parts, equipment, tools, and technicians at the vehicle service sites.

In certain aspects of this disclosure, an edge computing architecture is provided that comprises dedicated edge devices installed at each vehicle service site, which are connected to a centralized cloud platform. This distributed approach allows for the majority of data processing and decision-making to occur locally at each service site, reducing network latency and enhancing real-time capabilities. Edge devices can execute a site controller application, which manages various localized functions such as scheduling, diagnostics, and asset tracking. By processing data locally, the system can respond rapidly to changing conditions and service requests, optimizing workflow efficiency. The edge devices also communicate with the centralized cloud platform for global activities like software updates, cross-site analytics, and dissemination of technical service bulletins. This architecture offers several advantages, including improved responsiveness, reduced bandwidth requirements, enhanced data privacy and security, and the ability to operate with intermittent cloud connectivity. The edge-based structure also facilitates scalability, allowing new service sites to be easily integrated into the network by deploying additional edge devices. Additionally, this edge computing approach enables the system to maintain high performance and operational efficiency across multiple service locations while leveraging cloud resources for broader, network-wide functions.

In certain aspects of this disclosure, a scheduling system of the site controller application can be designed to optimize and coordinate service requests at vehicle service sites. It integrates data from multiple sources, including IoT devices and the computer vision system, to make real-time scheduling decisions. The scheduling system considers factors such as the availability of service bays, technicians with appropriate skillsets, necessary equipment and tools, cost, and the availability of required vehicle parts. In some embodiments, the availability of the required vehicle parts can be determined by the automated sourcing function. In some embodiments, delivery times of the required vehicle parts can be tracked automatically. In some embodiments, the scheduling system of the site controller application can automatically update the schedule for a technician or service bay based on the expected delivery date and/or time of the required vehicle part. In some embodiments, the scheduling system of the site controller application can automatically update the schedule for a technician or service bay when an update to the expected delivery date and/or time is received for the required vehicle part, or when the anticipated arrival time for the required vehicle part has passed. The scheduling system of the site controller application can re-arrange the schedule for a technician or service bay to avoid downtime and prioritize shop time for repairs where the required vehicle parts have been delivered. In some embodiments, the scheduling system of the site controller application can trigger the automated sourcing function to order an additional required vehicle part if another required vehicle part is available, will arrive sooner than the originally ordered required vehicle part, and minimize technician or service bay downtime. In some embodiments, the automated sourcing function can improve on-time delivery by dynamically replanning a schedule based on part sourcing and estimated delivery times. By leveraging real-time data from IoT devices, such as RFID scanners tracking tool and part locations, and analytics from the computer vision system, which can detect vehicle locations, service bay usage, and technician activities, the scheduling system can dynamically adjust and optimize service schedules. This integration allows for rapid response to changing conditions, such as unexpected delays or early completions of tasks, enabling the system to reallocate resources and reschedule service requests on the fly.

This advanced scheduling approach offers several key advantages for vehicle service sites. It may significantly improve operational efficiency by maximizing the utilization of service bays, technicians, and equipment. The ability to make real-time adjustments based on current conditions may reduce downtime and increase overall productivity. By considering factors such as technician expertise and equipment availability, the system may ensure that each service request is matched with the most appropriate resources, potentially improving service quality and reducing turnaround times. The integration of real-time data may also enhance the accuracy of estimated completion times, improving customer satisfaction through more reliable scheduling. Additionally, the system's ability to automatically adjust to unexpected events, such as emergency repairs or equipment failures, may help maintain smooth operations even in challenging circumstances. The intelligent scheduling system allows for increased throughput, improved resource utilization, and enhanced customer satisfaction for vehicle service sites.

In certain aspects of this disclosure, the site controller application also can be configured with functionalities that facilitate rapid vehicle part sourcing. The automated sourcing function streamlines the process of identifying and obtaining vehicle parts for service requests. When diagnostic information is obtained for a vehicle, the system can automatically cross-reference the vehicle type and desired part types with a database of compatible parts. This database may include information on part specifications, availability, pricing, and supplier details. The system can then recommend optimal parts based on various criteria such as cost-effectiveness, quality ratings, customer preferences for premium or economy parts, historical performance data, compatibility with specific vehicle models, availability and delivery times, warranty coverage, and/or alignment with site policies or preferred supplier agreements. In some embodiments, the system can perform global historical similarity searches based on prior cases to prioritize candidate and associated parts. In some embodiments, the system can estimate success likelihoods (e.g. comeback ratios). The global historical similarity searches can search for vehicle type, make, model, or year, complaints, findings, and/or outcomes. In some embodiments, the system can build a complaint finding signature. The complaint finding signature can be based on the ingested vehicle data, the customer complaint, and/or the technician findings. The complaint finding signature can be used to represent the case in the global historical similarity search. The complaint finding signature can be used to retrieve similar cases, identify candidate parts for a repair, identify associated parts for the candidate parts, determine success likelihoods for the candidate or associated parts, and determine expected installation times. Once parts are identified, the system can initiate the ordering process.

This automated approach offers several advantages over traditional manual sourcing methods. It may significantly reduce the time and effort typically spent by technicians or service advisors in researching and ordering parts, minimizing vehicle downtime. The system's ability to quickly identify compatible parts and consider multiple factors in its recommendations may help avoid costly errors in part selection and improve overall repair quality. By integrating with inventory and ordering systems, the automated sourcing function may also optimize stock levels and streamline the supply chain, potentially reducing carrying costs and improving cash flow for the service site.

The embodiments described in this disclosure can be combined in various ways. Any aspect or feature that is described for one embodiment can be incorporated to any other embodiment mentioned in this disclosure. Moreover, any of the embodiments described herein may be hardware-based, may be software-based, or, preferably, may comprise a mixture of both hardware and software elements. Thus, while the description herein may describe certain embodiments, features, or components as being implemented in software or hardware, it should be recognized that any embodiment, feature and/or component referenced in this disclosure can be implemented in hardware and/or software.

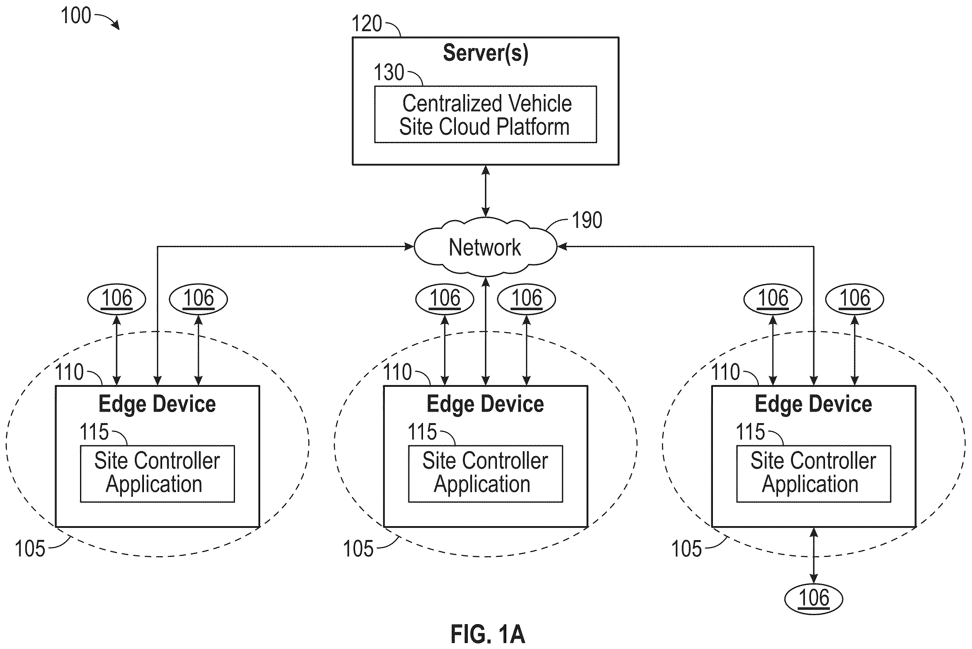

FIG. 1A illustrates an exemplary vehicle service system 100 according to certain embodiments. The vehicle service system 100 can include, inter alia, a centralized vehicle service cloud platform 130, one or more edge devices 110, one or more site controller applications 115, one or more Internet-of-Things (IoT) devices 106, and/or one or more servers 120 that are in communication over a network 190. The network 190 may represent any type of communication network, e.g., such as one that comprises a local area network (e.g., a Wi-Fi network), a personal area network (e.g., a Bluetooth network), a wide area network, an intranet, the Internet, a cellular network, a television network, a satellite communication network, and/or other types of networks.

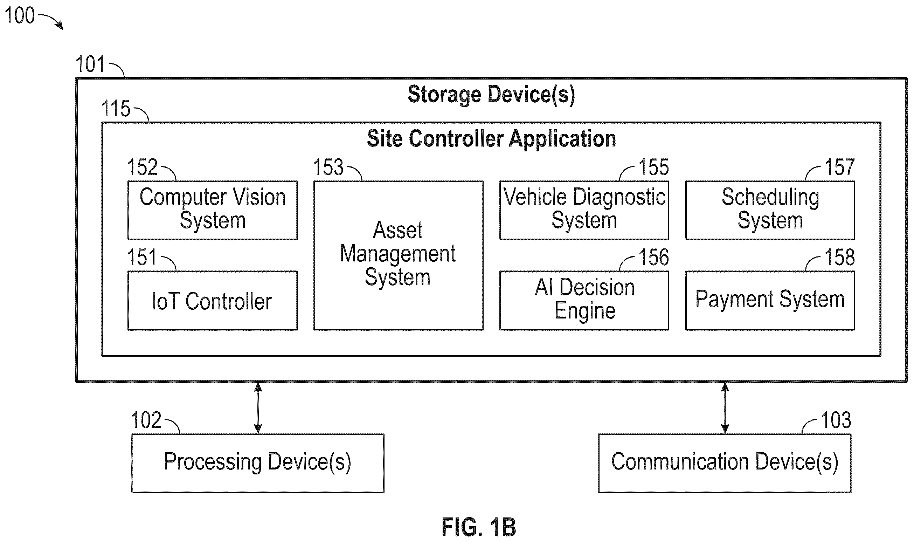

All the components illustrated in FIG. 1A, including the edge device(s) 110, server(s) 120, IoT device(s) 106, and site controller application(s) 115 can be configured to communicate directly with each other and/or over the network 190 via wired or wireless communication links, or a combination of the two. Each of the edge devices 110, servers 120, IoT devices 106, and site controller applications 115 can include one or more storage devices 101 (FIG. 1B), one or more processing device(s) 102 (FIG. 1B), and/or one or more communication devices 103 (FIG. 1B).

The one or more storage devices 101 (FIG. 1B) may include (i) non-volatile memory, such as, for example, read only memory (ROM) and/or (ii) volatile memory, such as, for example, random access memory (RAM). The non-volatile memory may be removable and/or non-removable non-volatile memory. RAM may include dynamic RAM (DRAM), static RAM (SRAM), etc. Further, ROM may include mask-programmed ROM, programmable ROM (PROM), one-time programmable ROM (OTP), erasable programmable read-only memory (EPROM), electrically erasable programmable ROM (EEPROM) (e.g., electrically alterable ROM (EAROM) and/or flash memory), etc. In certain embodiments, the one or more storage devices 101 (FIG. 1B) include physical, non-transitory mediums. The one or more computer storage devices 101 (FIG. 1B) can store instructions for implementing any of the functionalities associated with the centralized vehicle service cloud platform 130 and/or site controller applications 115.

The one or more processing device(s) 102 (FIG. 1B) may include one or more central processing units (CPUs), one or more microprocessors, one or more microcontrollers, one or more controllers, one or more complex instruction set computing (CISC) microprocessors, one or more reduced instruction set computing (RISC) microprocessors, one or more very long instruction word (VLIW) microprocessors, one or more graphics processor units (GPU), one or more digital signal processors, one or more application specific integrated circuits (ASICs), and/or any other type of processor or processing circuit capable of performing desired functions. The one or more processing device(s) 102 (FIG. 1B) can be configured to execute any computer program instructions that are stored or included on the one or more storage devices 101 (FIG. 1B) including, but not limited to, instructions associated with executing the functionalities of the centralized vehicle service cloud platform 130 and/or site controller applications 115.

Each of the one or more communication devices 103 (FIG. 1B) can include wired and wireless communication devices and/or interfaces that enable communications using wired and/or wireless communication techniques. Wired and/or wireless communication can be implemented using any one or combination of wired and/or wireless communication network topologies (e.g., ring, line, tree, bus, mesh, star, daisy chain, hybrid, etc.) and/or protocols (e.g., personal area network (PAN) protocol(s), local area network (LAN) protocol(s), wide area network (WAN) protocol(s), cellular network protocol(s), powerline network protocol(s), etc.). Exemplary PAN protocol(s) can comprise Bluetooth, Zigbee, Wireless Universal Serial Bus (USB), Z-Wave, etc. Exemplary LAN and/or WAN protocol(s) can comprise Institute of Electrical and Electronic Engineers (IEEE) 802.3 (also known as Ethernet), IEEE 802.11 (also known as WiFi), etc. Exemplary wireless cellular network protocol(s) can comprise Global System for Mobile Communications (GSM), General Packet Radio Service (GPRS), Code Division Multiple Access (CDMA), Evolution-Data Optimized (EV-DO), Enhanced Data Rates for GSM Evolution (EDGE), Universal Mobile Telecommunications System (UMTS), Digital Enhanced Cordless Telecommunications (DECT), Digital AMPS (IS-136/Time Division Multiple Access (TDMA)), Integrated Digital Enhanced Network (iDEN), Evolved High-Speed Packet Access (HSPA+), Long-Term Evolution (LTE), WiMAX, etc. The specific communication software and/or hardware can depend on the network topologies and/or protocols implemented. In certain embodiments, exemplary communication hardware can comprise wired communication hardware including, but not limited to, one or more data buses, one or more universal serial buses (USBs), one or more networking cables (e.g., one or more coaxial cables, optical fiber cables, twisted pair cables, and/or other cables). Further exemplary communication hardware can comprise wireless communication hardware including, for example, one or more radio transceivers, one or more infrared transceivers, etc. Additional exemplary communication hardware can comprise one or more networking components (e.g., modulator-demodulator components, gateway components, etc.). In certain embodiments, the one or more communication devices 103 (FIG. 1B) can include one or more transceiver devices, each of which includes a transmitter and a receiver for communicating wirelessly. The one or more communication devices 103 (FIG.1B) also can include one or more wired ports (e.g., Ethernet ports, USB ports, auxiliary ports, etc.) and related cables and wires (e.g., Ethernet cables, USB cables, auxiliary wires, etc.).

In certain embodiments, the one or more communication devices 103 (FIG. 1B) additionally, or alternatively, can include one or more modem devices, one or more router devices, one or more access points, and/or one or more mobile hot spots. For example, modem devices may enable the edge devices 110, server(s) 120, and/or computer vision system 152 (FIG. 1B) to be connected to the Internet and/or other network. The modem devices can permit bi-directional communication between the Internet (and/or other network) and the edge devices 110, server(s) 120, and/or computer vision system 152 (FIG. 1B). In certain embodiments, one or more router devices and/or access points may enable the edge devices 110, server(s) 120, and/or computer vision system 152 (FIG.1B) to be connected to a LAN and/or other more other networks. In certain embodiments, one or more mobile hot spots may be configured to establish a LAN (e.g., a Wi-Fi network) that is linked to another network (e.g., a cellular network). The mobile hot spot may enable the edge devices 110, server(s) 120, IoT devices 106, and/or site controller applications 115 to access the Internet and/or other networks.

One or more edge devices 110 may be installed at each of a plurality of vehicle service sites 105. Each of the vehicle service sites 105 may correspond to a location or environment for servicing vehicles, such as a vehicle repair or maintenance location. Each edge device 110 can correspond to a hardware terminal that is configured to communicate with the centralized vehicle service cloud platform 130 over the network 190. In certain embodiments, the edge devices 110 can interface with the centralized vehicle service cloud platform 130 via a private network or intranet.

The configuration of the edge devices 110 can vary. In some embodiments, some or all of the edge devices 110 may include a terminal that comprises dedicated hardware and/or software specially designed for communicating with devices connected to the vehicle service system 100 and/or for facilitating the various functionalities described herein (e.g., associated with performing vehicle diagnostics, tracking, scheduling, part sourcing, etc.). In some embodiments, the dedicated terminals can comprise touch screen interfaces to facilitate rapid input of relevant data and/or point-of-sale capabilities. The terminals also can be configured to securely establish communications with the centralized vehicle service cloud platform 130 over a private network and may store software specifically for exchanging information with the centralized vehicle service cloud platform 130 in a secure fashion. Additionally, or alternatively, some or all of the edge devices 110 may represent desktop computers, laptop computers, mobile devices (e.g., smart phones, personal digital assistants, tablet devices, wearable devices, or any other device that is mobile in nature), and/or other types of electronic devices.

Each of the edge devices 110 can execute a site controller application 115 that is configured to execute various functions that optimize both human-based and machine-based operations for a corresponding vehicle service site 105 where the edge device 110 is installed.

The physical layout of vehicle service site 105 (e.g., such as the number and locations of service bays, tools, and equipment) can have a significant impact on the productivity of a vehicle service site 105. In general, the capacity of vehicle service site 105 can be viewed as the maximum calculated figure of a physical space with each vehicle service bay being utilized 100% of the time without waste or downtime. To maximize productivity at a vehicle service site 105, scheduling and logistical challenges are presented with respect to ensuring that (i) each bay being is occupied by a vehicle with an identified service need; (ii) technicians with the required training, skills, and/or certifications are available to fulfill the service need; (iii) the required tools and equipment are available and allocated to fulfill the service need; and (iv) the vehicle parts and/or fluids used to complete the service are timely sourced and available. The capacity of the vehicle service site 105 is further constrained by the amount of service time in a workday or shift. Thus, efforts to maximize the productivity (and, in turn, potential revenue) of the vehicle service site should account for these and other factors. Waste and downtime can be minimized by improving the choreography of humans, machines, tools, equipment, and/or vehicle parts at the vehicle service site 105.

Along these lines, the site controller application 115 can be configured to perform various functions to optimize operations at a vehicle service site 105. Amongst other things, the site controller application 115 can streamline operations and maximize efficiency by automating service request scheduling (e.g., including scheduling based on availability of service bays, technicians, equipment, tools, and other factors), tracking statuses of ongoing vehicle service requests, collecting vehicle diagnostics and service request information, and facilitating parts ordering and sourcing for vehicle repairs or maintenance. These and other functionalities of the site controller application 115 can assist with standardizing services provided across vehicle service sites 105 and and/or maximizing the productivity of the vehicle service sites 105.

To facilitate these and other functionalities, the site controller application 115 can collect and/or store various types of site-specific information corresponding to a vehicle service site 105, such as information indicating site layout information (e.g., identifying the number and/or locations of service bays, the equipment available at the site and/or in each service bay, etc.), technician information (e.g., indicating the number of technicians who service their site, as well as their certifications, expertise, personal information, work schedules, and/or historical performance specific to a year, make, model, generation, or service need of a vehicle), service request information (e.g., indicating historical, current, and/or upcoming vehicle service requests, statuses of the requests, types of service requests, etc.), and/or other relevant information. The site controller application 115 may utilize this information for, inter alia, scheduling and tracking service requests from initiation to completion.

As explained in further detail below, an edge device 110 and/or site controller application 115 installed at a vehicle service site 105 may collect and process data from one or more Internet-of-Things (IoT) devices 106 located at the vehicle service site 105 to assist the site controller application 115 with performing some or all of the above functions. In some examples, the IoT devices 106 can collect data for tracking people, vehicles, equipment, and/or parts at the vehicle service site 105, and this information can be transmitted to an edge device 110 and utilized as inputs for the site controller application 115 to facilitate real-time scheduling and/or decision-making processes pertaining to vehicle service requests. In some embodiments, site controller application 115 can rely on cross-shop outcomes. In some embodiments, site controller application 115 can operate in a limited standalone model with local-only history. In the limited standalone model, site controller application can rely on repair orders, schedules, supplier APIs, and/or manual complaint finding without relying on live telemetry, change management, or data from other shops.

Each vehicle service site 105 may be equipped with various types of IoT devices 106. In some embodiments, the IoT devices 106 can include artificial intelligence or Al-enabled cameras that can be configured to extract various types of information about service requests and operations at a vehicle service site to aid the site controller application 115 in managing the vehicle service site 105. For example, the AI-enabled cameras can be configured to identify a vehicle type (e.g., based on its tag, make, model, color, etc.) and/or track the vehicle throughout the environment of the vehicle service site 105. In further examples, the IoT devices 106 can include extended reality (XR) headsets that are worn by technicians at the vehicle service site 105 and which assist with dispatching technicians, identifying service needs, and/or other functions. In further examples, the IoT devices 106 can include radio-based tag readers that can be used to track equipment, tools, and/or vehicles (e.g., which would allow the system to know when certain tools or equipment are in use and where they are being utilized). As explained in further detail below, these and/or other IoT devices 106 can assist the site controller application 115 with automating the scheduling of service requests, allocating service areas and technicians, and/or tracking statuses of ongoing service requests.

The centralized vehicle service cloud platform 130 can be stored on, and executed by, one or more servers 120. The one or more servers 120 may generally represent any type of computing device, including any of the edge devices 110 mentioned above. The one or more servers 120 also can comprise one or more mainframe computing devices, one or more virtual servers, one or more application servers, and/or one or more cloud servers. In some embodiments, the one or more servers 120 can be configured to execute web servers and can communicate with the edge devices 110 and/or other devices over the network 190 (e.g., over the Internet).

In certain embodiments, the centralized vehicle service cloud platform 130 can be hosted in a cloud environment on a cloud server system that is connected to, and in communication with, each of the edge devices 110 installed or located at the vehicle service sites 105. The centralized vehicle service cloud platform 130 can operate as a global controller or manager of the vehicle service sites 105 and corresponding edge devices 110. The centralized vehicle service cloud platform 130 can be configured to receive and/or process any data or information that is collected by the edge devices 110 across the various vehicle service sites 105. Additionally, the centralized vehicle service cloud platform 130 can be configured to perform global activities or functionalities across the vehicle service system 100, such as obtaining and promulgating technical service bulletins (TSBs) received from manufacturers across the edge devices 110, distributing software updates corresponding to the edge devices 110, site controller applications 115, and/or IoT devices 106, and/or performing global analytics across data collected by the edge devices 110. The centralized vehicle service cloud platform 130 can aggregate cross-shop outcomes to power similarity across shops, reliability models for part fitment, and diagnostic forecasting or standardization. The centralized vehicle service cloud platform 130 can create year, make, and/or model generational groupings to aggregate data by failure rates over time. In some embodiments, the generational groupings can include one or more complaint-finding signatures. In some embodiments, the centralized vehicle service cloud platform 130 can determine failure rates for parts recommended by the automated sourcing function. In some embodiments, the centralized vehicle service cloud platform 130 can instruct the automated sourcing function to stop recommending a part if the part failure rate is above a threshold. In some embodiments, the threshold can be set by the shop. In some embodiments, the threshold can be set for a part type. In some embodiments, the threshold can allow for a 2% failure rate. In some embodiments, the threshold can allow for a higher failure rate if there are no alternative parts available, or if the part alternatives have higher failure rates. In some embodiments, the centralized vehicle service cloud platform 130 can instruct the automated sourcing function not to recommend a part with a failure rate above a threshold unless use of another similar part would negatively impact overall productivity of the shop.

The edge-based network architecture described herein offers several advantages. By moving the bulk of the computing to dedicated edge devices at each vehicle service site, network traffic is substantially reduced, resulting in a more efficient distributed computing model. This approach allows for rapid local processing and decision-making while still leveraging cloud computing capabilities for global activities such as obtaining technical service bulletins or performing cross-site analytics. The configuration of the network also facilitates scalability, allowing for seamless integration of new vehicle service sites as the system expands. Each new site can be easily equipped with one or more edge devices 110 that connect to the centralized vehicle service cloud platform 130, ensuring consistent functionality and data management across the entire vehicle service system 100. This scalability, combined with the distributed computing model, enables the system to maintain high performance and responsiveness even as it grows to accommodate additional vehicle service sites 105. In certain embodiments, the edge-based architecture may enhance data security and privacy by processing sensitive information locally, while also improving system resilience by reducing dependence on constant cloud connectivity for core operations.

The system and network configurations described herein are provided as examples to demonstrate environments in which embodiments can be deployed. Numerous modifications and variations to the disclosed embodiments are possible, and the techniques described herein can be implemented in many other contexts and environments.

In some exemplary variations, some or all of the functionalities of the site controller application 115 can be executed by an edge device 110 associated with a vehicle service site 105, an edge server in communication with the edge device 110, and/or a combination thereof. Thus, any functionality of the site controller application 115 can be executed individually by an edge device 110 or edge server associated with a vehicle service site 105, or jointly by the edge device 110 or edge server.

In some exemplary variations, some or all of the functionalities of the site controller application 115 can be migrated to the centralized vehicle service cloud platform 130, and the centralized vehicle service cloud platform 130 can be configured to execute such functionalities and communicate outputs or results to edge devices 110 and/or edge servers located at the vehicle service sites 105. For example, in some configurations, certain components (e.g., such as learning models or networks and/or other software components of the site controller application 115) may be stored remotely on the centralized vehicle service cloud platform 130 to facilitate centralized updating and analysis operations.

Additionally, while many embodiments described herein can utilize an edge-based network architecture, the vehicle service systems 100 described herein are not limited to such. For example, in some embodiments, the functionalities of the vehicle service system 100 can be implemented as a client-server architecture, rather than an edge-based network architecture. In the client-server configuration, the edge devices 110 (or computing devices) located at the vehicle service sites 105 may include a web browser or front-end application that executes some or all of the functionalities corresponding to the site controller application 115 and the servers 120 may host a server application or back-end application that executes some or all of the functionalities corresponding to the centralized vehicle service cloud platform 130.

Many other variations of the systems and network architectures also are possible.

FIG. 1B is a block diagram illustrating functions, components, and/or features of a site controller application 115 according to certain embodiments. The functions, components, and/or features of the site controller application 115 can be executed by an edge device 110 (FIG. 1A), an edge server, and/or other devices associated with the vehicle service systems 100, either individually or jointly in combination.

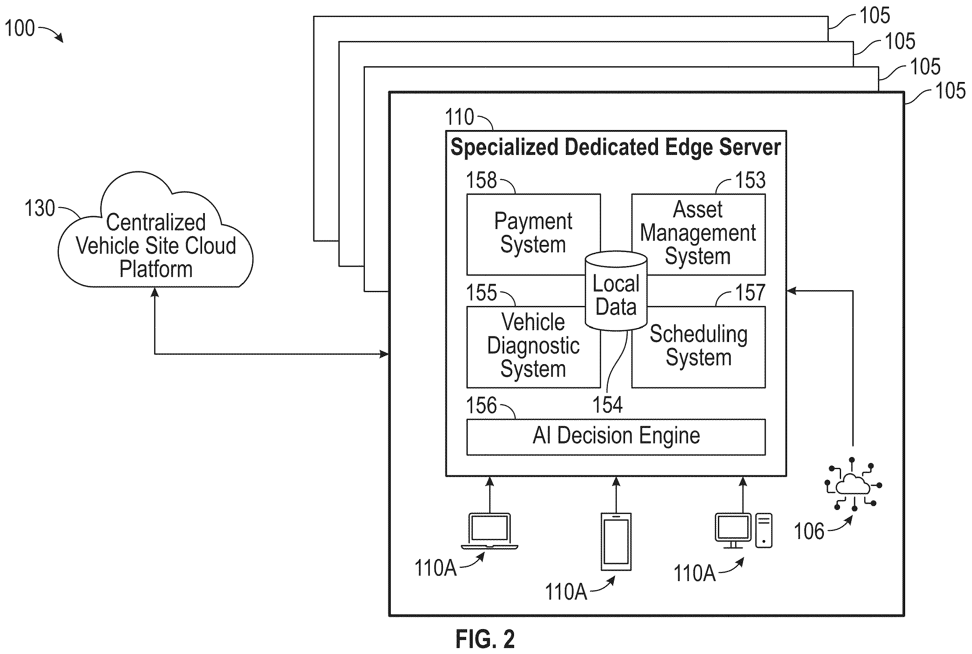

In this embodiment, the site controller application 115 includes (or communicates with) an IoT controller 151, payment system 158, vehicle site database 154 (FIG. 2), asset management system 153, AI decision engine 156, vehicle diagnostic system 155, and scheduling system 157. While these components are illustrated as being individual or distinct components, it should be recognized that the functionalities of these components can overlap and/or can be combined in various ways.

The IoT controller 151 can generally be configured to execute functions for communicating with IoT devices 106 (FIG. 1A, FIG. 2) located at a vehicle service site 105 (FIG. 1A, FIG 2), receiving data from the IoT devices 106, and/or processing data received from the IoT devices 106. In some examples, the IoT controller 151 can be configured to analyze data transmitted by the IoT devices 106 and extract information that can be utilized to for downstream decision-making capabilities and/or to automate scheduling functionalities.

The types of IoT devices 106 (FIG. 1A, FIG. 2) installed or provided at a vehicle service site 105 (FIG. 1A, FIG 2) can vary. In some examples, a vehicle service site 105 may be equipped with one or more of the following: camera devices, radio tag readers, XR headsets, smart sensors, connected diagnostic tools, networked vehicle lifts, digital fluid dispensers, smart power tools, environmental monitoring systems, automated parts inventory trackers, wearable devices for technicians, connected tire pressure gauges, and/or other types of IoT devices 106.

Each of the IoT devices 106 (FIG. 1A, FIG. 2) may be coupled to the IoT controller 151 and may transmit data to the IoT controller 151. For example, camera devices may transmit visual data (e.g., images content or video content) to the IoT controller 151 identifying vehicle positions, technician activities, service bay occupancy, and/or equipment usage. The camera devices can transmit data including live shop telemetry in near real time. Radio tag readers may send information about the location and movement of tagged tools, parts, and/or vehicles. XR headsets could transmit data on technician activities, repair progress, and augmented reality guidance usage. Smart sensors may provide environmental data (e.g., such as temperature, humidity, and air quality in the shop) and/or may indicate whether certain pieces of equipment are being used. Connected diagnostic tools may send vehicle diagnostic information, error codes, and system performance data. Networked vehicle lifts could transmit data on lift status, weight load, and usage duration. Digital fluid dispensers may send information on fluid types, quantities dispensed, and inventory levels. Smart power tools could transmit data on usage time, torque applied, and maintenance needs. Environmental monitoring systems may provide data on noise levels, air quality, and energy consumption. Automated parts inventory trackers could send real-time updates on part quantities, locations, and reorder needs. Wearable devices for technicians may transmit location information, and task completion status. Connected tire pressure gauges could send tire pressure readings, temperature data, and usage frequency information. Many other types of IoT devices 106 (FIG. 1A, FIG. 2) also can be incorporated into the environment of the vehicle service site 105 (FIG. 1A, FIG 2) and each device can be configured to communicate with, and transmit data to, the IoT controller 151.

The site controller application 115 may utilize the data collected by the IoT controller 151 for various purposes. For the site controller application 115 may utilize the data to determine statuses of service bays (e.g., available or unavailable), statuses and locations of technicians (e.g., available or unavailable), statuses of equipment or tolls (e.g., in use or not currently being used), and/or statuses of service requests (e.g., indicating which vehicles are being currently being serviced, expected service request completion times, etc.). In turn, the site controller application 115 may utilize the data to automatically adjust scheduling of service requests in real-time and/or may provide notifications or recommendations for adjusting the scheduled service requests. Additionally, the site controller application 115 also may analyze the data collected over a certain time period to determine average time expenditures on various types of service requests or operations at the vehicle service site 105 (FIG. 1A, FIG 2).

Imaging content (e.g., static images or videos) received from IoT devices 106 (FIG. 1A, FIG. 2) or other camera devices located at the vehicle service site 105 (FIG. 1A, FIG 2) may be fed to a computer vision system 152 for analysis. The computer vision system 152 can execute various analysis tasks on the imaging content to glean additional information about the statuses of service requests and/or conditions at the vehicle service site 105. In some examples, the computer vision system 152 may execute object detection, scene detection, object classification, scene classification, and/or segmentation tasks on the imaging content to extract details about the statuses of service requests, conditions at the vehicle service site 105, and/or other information mentioned in this disclosure.

In some exemplary embodiments, the computer vision system 152 can be trained to analyze imaging content to extract data indicating one or more of the following:
- the service bays are in use and/or not in use;
- the various pieces of equipment and/or tools are in use or available for use;
- the type of vehicle (e.g., model, make, and/or year) that is the subject of an ongoing or upcoming service request;
- the technicians or individuals assigned to a service request or assisting with a service request;
- the current status or progress of ongoing repairs or maintenance tasks;
- safety hazards or potential workplace risks;
- the duration of time vehicles spend in each service bay;
- the estimated time remaining on a service request;
- the estimate time remaining with respect to utilizing a service bay, equipment, or tools;
- the flow of vehicle traffic through the shop, including entry and exit patterns;
- the correct placement and storage of tools and equipment when not in use;
- the identification of specific vehicle parts or components being worked on;
- the locations of replacement parts available for service requests;
- the inventory levels for replacement parts; and/or
- the arrival, time spent, and departure of delivery vehicles.

The computer vision system 152 can extract various other types of information in addition to the examples listed above.

The computer vision system 152 can be hosted by various devices. For example, in some embodiments, the computer vision system 152 can be hosted locally on an edge device 110 (FIG. 1A, FIG. 2) or edge server at a vehicle service site 105 (FIG. 1A, FIG 2). In other embodiments, the computer vision system 152 can be hosted remotely, such on the centralized vehicle service cloud platform 130 (FIG. 1A, FIG. 2) or a third-party server system. In the case of the latter, the site controller application 115 can communicate with remotely hosted computer vision system 152 (e.g., via an application programming interface or API) to access the functionalities of the computer vision system 152. In other embodiments, the computer vision system 152 can be directly integrated with camera devices.

The configuration of the computer vision system 152 can vary. In certain embodiments, the computer vision system 152 may comprise a convolutional neural network (CNN), or a plurality of convolutional neural networks. Each CNN may represent an artificial neural network and may be configured to analyze images and to execute deep learning functions and/or machine learning functions on the images. Each CNN may include a plurality of layers including, but not limited to, one or more input layers, one or more output layers, one or more convolutional layers (e.g., that include learnable filters), one or more ReLU (rectifier linear unit) layers, one or more pooling layers, one or more fully connected layers, one or more normalization layers, etc. The configuration of the CNNs and their corresponding layers can be configured to enable the CNNs to learn and execute various functions for analyzing, interpreting, and understanding the images, including any of the functions described in this disclosure. Other types of learning models other than, or in addition to, CNNs also may be utilized to implement the functionalities of the computer vision system 152.

Regardless of its configuration, the computer vision system 152 can be trained to execute various computer vision functions. For example, in some cases, the computer vision system 152 can be trained to execute object detection functions, which may include predicting or identifying locations of objects (e.g., using bounding boxes) associated with one or more target classes in the images. Additionally, or alternatively, the computer vision system 152 can be trained to execute object classification functions, which may include predicting or determining whether objects in the images belong to one or more target semantic classes and/or predicting or determining labels for the objects in the images. Additionally, or alternatively, the computer vision system 152 can be trained to execute instance segmentation functions, which may include predicting or identifying precise locations of objects in the images with pixel-level accuracy and/or extracting objects from the images. The computer vision system 152 can be trained to perform other types of computer vision functions as well.

In some exemplary embodiments, the computer vision system 152 can be trained to detect and classify a wide range of objects and scenes relevant to the automotive repair or service environments. In some examples, the computer vision system 152 can be configured to identify different makes, models, and types (e.g., sedans, SUVs, trucks) for vehicles, as well as specific vehicle parts like engines, tires, and body panels. In another example, the system can be trained to recognize various tools and equipment, such as wrenches, diagnostic scanners, lifts, and air compressors. In another example, the computer vision system 152 also can detect and track technicians or individuals located in service bays or other areas of a vehicle service site 105 (FIG. 1A, FIG 2). In another example, the computer vision system 152 can also analyze broader scenes, such as determining whether service bays are occupied or vacant, identifying the stages of repair processes (e.g., vehicle on lift, hood open, wheels removed). In another example, it can be trained to recognize safety hazards, like spills or improperly stored equipment, and monitor the proper use of safety gear by technicians. In another example, the system can also be trained to detect subtle cues that indicate the progress of repairs, such as the positioning of tools around a vehicle or the presence of replacement parts near a work area.

In certain embodiments, one or more training procedures may be executed to train the computer vision system 152 to perform the computer vision functions described in this disclosure. The training procedures can enable the computer vision system 152 to learn various types of objects and scenes pertaining to vehicle service sites 105. The specific procedures that are utilized to train the neural network architecture can vary. In some cases, one more supervised training procedures, one or more unsupervised training procedures, and/or one or more semi-supervised training procedures may be applied to train the neural network architecture, or certain portions of the neural network architecture. In some embodiments, a supervised training procedure may be applied that utilizes domain-specific images corresponding to vehicle service sites 105 (FIG. 1A, FIG 2), vehicles, vehicle parts, etc.

As explained in further detail below, the information extracted by the computer vision system 152 can be stored for usage in decision-making, scheduling, and/or other operations performed by the site controller application 115.

The asset management system 153 can be configured to execute functions associated with tracking assets, vehicle parts, and/or individuals at a vehicle service site 105 (FIG. 1A, FIG 2), as well as expediting vehicle part sourcing operations at a vehicle service site 105. In some embodiments, asset management system 153 can synchronize part arrival with real-time readiness of a bay, technician, equipment, and/or tool.

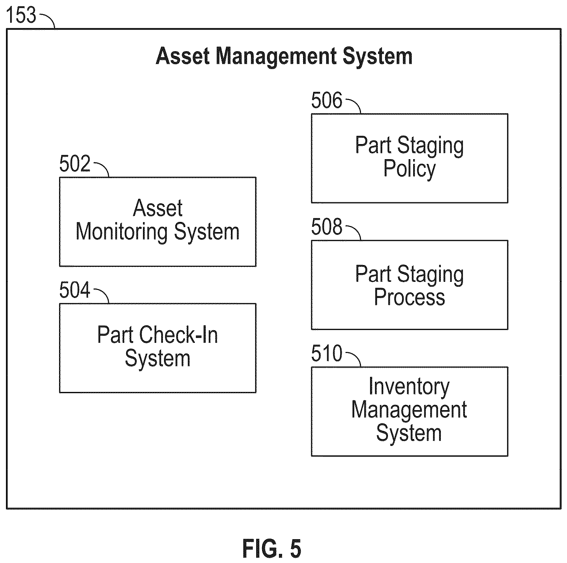

FIG. 5 illustrates exemplary components and features that can be included in an asset management system 153 according to certain embodiments. The asset management system 153 can include an asset monitoring system 502, a part check-in system 504, a part staging policy 506, a part staging process 508, and/or an inventory management system 510.

Vehicle service sites 105 (FIG. 1A, FIG 2) may utilize a collection of useable assets and resources to fulfill vehicle service requests. The assets utilized to fulfill service requests can include various vehicle parts (e.g., wiper blades, air filters, spark plugs, brake components, cylinders, engine components, exhaust systems, body panels, and many others). The assets utilized to fulfill service requests also can include various types of equipment and tools (e.g., vehicle lifts, hydraulic jacks, pneumatic tools, diagnostic scanners, wheel alignment systems, tire mounting and balancing machines, brake lathes, engine hoists, transmission jacks, oil drains and fluid exchangers, welding equipment, air compressors, battery chargers and testers, torque wrenches, impact wrenches, socket sets, pressure gauges, coolant flush machines, fuel injection cleaning systems, exhaust gas analyzers, AC recovery and recharge stations, parts washers, headlight aim testers, and specialized manufacturer-specific tools, etc.). Technicians and other individuals also can be viewed as assets.

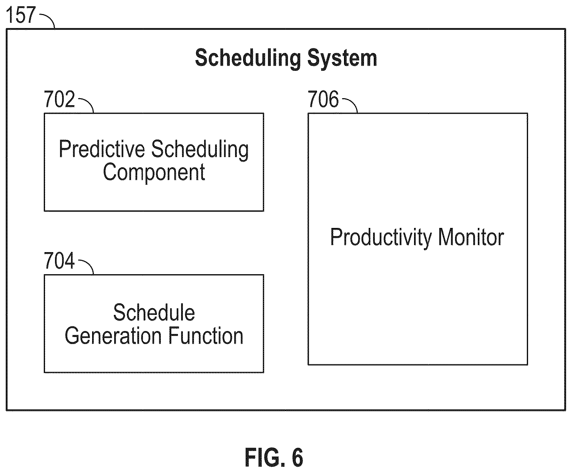

The asset monitoring system 502 can be configured to collect information indicating whether or not certain types of vehicle service equipment or tools are being used or scheduled to be used at a vehicle service site (e.g., determining whether or not vehicle lifts or other equipment are in use or scheduled to be used at a given time). For equipment or tools that are mobile or capable of being moved, the asset management system 153 can be configured to track locations of the equipment and tools throughout the vehicle service site environment. Along similar lines, the asset monitoring system 502 can be configured to monitor and manage inventory levels of vehicle parts, track the vehicle parts that are being used or scheduled to be used to fulfill ongoing or upcoming service requests, and/or track the locations of the vehicle parts throughout the vehicle service site environment. The asset management system 153 can communicate with, and provide data to, the scheduling system 157 (FIG. 6) to aid the scheduling system 157 with scheduling repairs and service requests based on policies of the site, desired service preferences, and availability of assets and resources.

The asset monitoring system 502 also can be configured to monitor and track the availability and locations of technicians and other personnel at the vehicle service site 105 (FIG. 1A, FIG. 2). This may include tracking whether technicians are currently available, engaged in a service task, or not working on a given day.

The asset monitoring system 502 can leverage data generated by IoT devices 106 (FIG. 1A, FIG. 2) to assist with tracking the usage and locations of equipment, tools, parts, individuals, and other assets throughout the vehicle service site environment. In one example, overhead radiowave based tag readers can track when certain tools or equipment are in use and their current locations, allowing the system to know when specific resources are available or occupied. In another example, RFID tags attached to vehicle parts can be scanned as they move through the service process, enabling real-time inventory management and location tracking of components from receipt to installation. In another example, AI-enabled camera devices can detect when service bays or other areas at the vehicle service site 105 (FIG. 1A, FIG 2) are occupied or in use. Additionally, technicians and other personnel can wear RFID-enabled badges, carry mobile devices, and/or wear XR headsets that allow the system to monitor their movements and current locations within the service environment, facilitating efficient task assignment and workflow optimization.

The part check-in system 504 can assist with tracking newly ordered parts and logging those parts into the asset management system 153. In some embodiments, the part check-in system 504 can monitor when parts are in transit to the vehicle service site 105 (FIG. 1A, FIG 2), when parts have been received by the shop, when parts are available for usage in service requests. The part check-in system 504 also can transmit alerts, notifications, or prompts to technicians, service advisors, and/or customers to notify them of the statuses of the incoming parts. The notifications can include SMS, email, push, or IoT based notifications. The notifications can be provided based on part sourcing or scheduling.

The asset management system 153 also may store one or more part staging policies 506. Each part staging policy 506 can specify where a given part, or type of part, should be moved once it is received by the vehicle service site 105 (FIG. 1A, FIG 2). For example, the part staging policy 506 can indicate whether a part can be brought to a service bay where the work will be performed, to the technician that will be performing the work, or to a storage location where it can be obtained by a technician or a delivery person. Part staging policy 506 can be modified based on technician availability, estimated delivery times for a part used for a repair, or optimization of efficiency. Change management nudges can be used to influence part staging in the shop or service bay.

The part staging process 508 can provide information to technicians, service advisors, or other individuals regarding the location of parts. The part staging process 508 can be configured to implement the part staging policies 506.

The inventory management system 510 can track inventory levels for parts, equipment, and/or assets. In some embodiments, the inventory management system 510 also can transmit recommendations to place orders for additional parts based on historical impact to productivity. In some embodiments, the inventory management system 510 can monitor which parts, commodities, equipment, or other materials are in stock, which parts, commodities, or other materials need to be re-ordered, and which parts, commodities, equipment, or other materials should be re-ordered automatically.

The inventory management system 510 can monitor and maintain inventory levels for parts, equipment, and other assets. In some embodiments, the system may analyze historical data to assess the impact of inventory levels on productivity, and use this information to generate recommendations for ordering additional parts or supplies. The inventory management system 510 can provide real-time visibility into which items are currently in stock, identify parts, commodities, or assets that need replenishment and, in some embodiments, can automate the reordering process for certain critical or frequently used items.

Returning to FIG. 1B, the site controller application 115 further includes a scheduling system 157 that can coordinate the scheduling of service requests at a vehicle service site 105 (FIG. 1A, FIG 2). The scheduling system 157 permits scheduling of the service based on the consideration of various factors, such as the availability of service areas at a vehicle service site 105, availabilities of technicians having appropriate skillsets, availability of equipment and/or tools used to fulfill the service requests, availability of vehicle parts for the service requests, and/or other considerations. The scheduling system 157 can leverage data from the IoT devices 106 (FIG. 1A, FIG. 2), asset management system 153, and/or other components to schedule the service requests in a manner that maximizes productivity at the vehicle service site 105 (FIG. 1A, FIG 2) and which attempts to ensure that all service bays or areas are continuously utilized with appropriate technicians, equipment, tools, parts, and vehicles in need of service. For example, the scheduling system 157 can integrate data from multiple sources, including IoT devices 106 (FIG. 1A, FIG. 2), computer vision system 152, the asset management system 153, and other components, to optimize service request scheduling. This integrated approach aims to maximize productivity at the vehicle service site 105 (FIG. 1A, FIG 2) and maintain continuous utilization of all service bays and areas by coordinating the availability of qualified technicians, necessary equipment and tools, required parts, and vehicles needing service. By aligning these elements, the scheduling system 157 works to minimize downtime and ensure that each service bay is operating at peak efficiency. Scheduling system 157 can transmit alerts, notifications, or prompts to technicians, service advisors, and/or customers to notify them of the statuses of the scheduling state. The notifications can include SMS, email, push, or IoT based notifications.

FIG. 6 illustrates exemplary components and features that can be included in the scheduling system 157 according to certain embodiments. The scheduling system 157 can include a predictive scheduling component 702, a schedule generation function 704, and/or a productivity monitor 706.

The predictive scheduling component 702 can attempt to determine when the shop will gain physical possession of a vehicle to facilitate more accurate allocation of resources and assets and maximize productivity in the shop. The predictive scheduling component 702 also can allow the shop to register options for the shop (e.g. loaner vehicles, shuttle service, third party ride share). Based on asset availability and preferences, the customer can select their needs and preferences. In some embodiments, the predictive scheduling component 702 can weigh the needs and preferences of the customer when determining potential time slots for that customer.

The schedule generation function 704 can incorporate inputs from various components of the site controller application 115 (FIG. 1A, FIG. 1B) and incorporate specified site policies and customer profiles to build a work schedule for each technician based on their capabilities, the work to be performed, historical productivity, and part availability.

In some embodiments, the schedule generation function 704 can integrate data from the asset management system 153 (FIG. 1B), as well as stored site policies and customer profiles, to create optimized work schedules for each technician. These schedules take into account the technician's skills and capabilities, the specific tasks to be performed, historical productivity metrics, and the availability of necessary parts. This intelligent scheduling approach may enhance overall site efficiency by matching the right technician to each job based on their expertise and past performance. The schedule generation function 704 may also consider factors such as the estimated time for each task, the priority of different jobs, and any special customer requirements. In some cases, the schedule generation function 704 may dynamically adjust schedules in real-time to account for unexpected delays, emergency repairs, or the arrival of high-priority customers. By balancing these various inputs, the system can help maximize technician utilization, minimize downtime, and improve customer satisfaction.

In certain embodiments, the scheduling system 157 can collect data using one or more entry points for vehicle and consumer data. During check-in, a vehicle owner can input data relating to themselves and their vehicle using a kiosk, website, or mobile application. In some embodiments, a VIN or tag decoder can be used to check in the vehicle owner using information collected from a database. The VIN or tag number can be correlated with car data including a year, make, model, or fit of the vehicle and/or customer information including a name or an address of the customer. This data can be utilized by the schedule generation function 704 in generating the schedules.

The productivity monitor 706 can monitor the work performed for each bay and provide productivity metrics or data indicating the efficiency of each service bay and overall operations at the vehicle service site 105 (FIG. 1A, FIG 2). These monitoring activities may be accomplished through various means. For example, the productivity monitor 706 may utilize inputs manually entered by technicians or service advisors to track or monitor the status of service requests as they progress. Additionally, the productivity monitor may leverage data from IoT devices 106 (FIG. 1A, FIG. 2) installed or located throughout the vehicle service site 105 (FIG. 1A, FIG 2) to track or monitor the status of service requests. In certain embodiments, the productivity of the service bays can be monitored in real-time using data generated by the IoT devices 106.

In some examples, AI-enabled cameras may be used to automatically detect and track vehicle movements, identifying when a vehicle enters or exits a service bay. These cameras can be trained to recognize different stages of repair work, such as when a vehicle is elevated on a lift, when the hood is open, or when specific tools are being used. Additionally, or alternately, radiofrequency identification (RFID) tags on tools, parts, and technician badges may provide further data points, allowing the system to track the time spent on each task and the resources utilized. Additionally, or alternately, sensors on equipment like diagnostic machines or lifts can transmit usage data, indicating when specific operations begin and end.

In certain embodiments, the productivity monitor 706 can create a comprehensive view of operations. It may calculate various productivity metrics, such as average service time per job type, technician efficiency rates, bay utilization percentages, and overall shop throughput. The productivity monitor 706 also may analyze the data collected by the system to identify bottlenecks or inefficiencies, such as excessive wait times between stages of a repair or underutilized equipment.

In some implementations, the productivity monitor 706 may use machine learning algorithms to analyze patterns in the collected data, potentially predicting service durations for incoming jobs based on historical performance and current shop conditions. This predictive capability may further enhance scheduling accuracy and overall productivity.

The productivity monitor 706 also can automatically adjust the workload of each bay or each technician based on the productivity metrics in order to optimize output and deliver on desired outcomes. The productivity monitor 706 can be trained to balance desired customer outcomes with policies for the vehicle service site 105.

In certain embodiments, the productivity monitor 706 tracks key performance indicators (KPIs) for the vehicle service site 105 (FIG. 1A, FIG 2) in real-time and/or forecasts results for the day, week, month, or any other time period automatically so that the site can adjust their performance effectively. In some examples, KPIs can be tracked which correspond to bay productivity by labor hour, bay productivity by sold hour, technician efficiency (e.g. their clocked in hours vs their hours working on a car), technician skill, part profiles, optimization weights, labor productivity (e.g. the technicians actual hours on a job vs the hours the shop billed for that job), the labor rate (e.g. the amount charged per hour vs cost incurred per hour), effective utilization of assets, the number of ROs, the number of ROs that had an inspection, the quality of the inspections done, the dollar amount of work found, the dollar amount of work estimated, the dollar amount of work quoted, the dollar amount of work sold, denied/delayed work by customer, and/or follow-up marketing. A first technician may be able to complete a job in thirty minutes while a second technician may take ninety minutes to complete the same job. Technician efficiency can be considered when making the schedule for the bay or the technician. A technician may be able to perform a first job or task more efficiently than other technicians while performing a second job or task less efficiently than other technicians. Actual service times can be compared to estimated service times as scheduled. Actual service times and estimated service times can be used as historical data for future scheduling in a shop. In some embodiments, a profile can be set up for a technician. The technician profile can include actual service times for the technician for a task. The technician profile of a first technician can be compared to other technician profiles for scheduling purposes so that the service requests for a shop can be productively assigned to the shop technicians.

These productivity measurements have historically been reactive in nature such that a vehicle service site 105 (FIG. 1A, FIG 2) runs reports either daily or weekly, and subsequently attempts to adjust their approach after the fact. In contrast, the productivity monitor 706 can facilitate real-time productivity tracking and adjustments as work is ongoing at a vehicle service site 105 (FIG. 1A, FIG 2).

In certain embodiments, maximum potential productivity (and, in turn, revenue) of a vehicle service site 105 (FIG. 1A, FIG 2) can be determined by multiplying the number of capacity hours by the labor rate of the site and adding the part price. The number of capacity hours can depend on the number of bays at the site. Site capacity can be the maximum calculated figure of a physical space with a vehicle lift or bay being utilized 100% of the time (productive) without downtime. For the bay to be productive, the bay should: (i) be occupied by a vehicle with an identified service need; (ii) have a technician with the training/skill required; (iii) have the requisite tools & equipment to perform the service; and (iv) have the part/fluids necessary to complete the service need. The site capacity can be limited by the amount of service time in a workday or shift. The scheduling system 157 (FIG. 6), asset management system 153 (FIG. 5), and other components of the site controller application 115 (FIG. 1A, FIG. 1B) can aim to improve the coordination of the technician scheduling, part ordering, part sourcing, scheduling, and other functions of the vehicle service system 100 to reduce the introduction of waste or downtime.

In certain embodiments, the scheduling system 157 can retain the customer data for later usage and can tag the data according to how it can be used in the system. For example, a vehicle owner can input data relating to their preferred transportation method while their vehicle is at the vehicle service site 105 (FIG. 1A, FIG. 2). Preferred transportation can include a loaner vehicle, a shuttle service, or a third-party ride share. The scheduling system 157 can consider the availability of the customers preferred transportation when providing potential time slots for that customer to obtain service. In some embodiments, the scheduling system 157 can consider a level of flexibility of the customer in generating schedules for the service requests at the vehicle service site 105. The level of flexibility of the customer can be a range with a requirement on one end of the range and a "nice to have" on the other end of the range.

In some embodiments, scheduling system 157 can require an action by a service advisor to approve the schedule once the schedule is presented, chosen, and approved by the customer. For example, after a schedule has been generated for a vehicle service site 105 and/or specific technician, the scheduling system 157 may request approval of the schedule before it goes into effect.

Returning to FIG. 1B, the site controller application 115 can further include or communicate with a vehicle diagnostic system 155. The vehicle diagnostic system 155 can be configured to execute functions associated with diagnosing or detecting vehicle issues or problems.

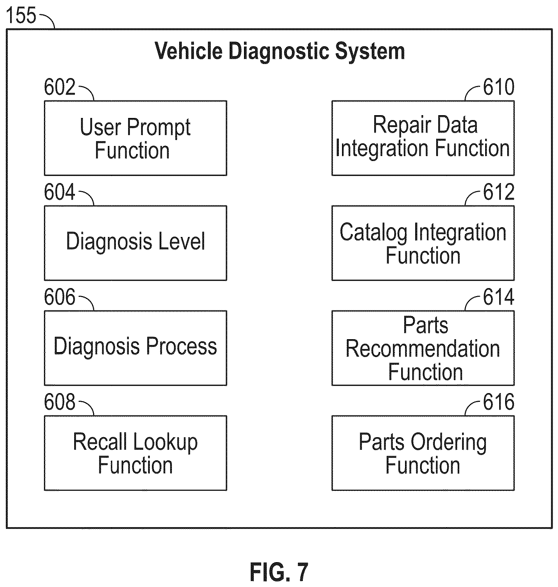

FIG. 7 illustrates exemplary components and features that can be included in the vehicle diagnostic system 155 according to certain embodiments. In certain embodiments, vehicle diagnostic system 155 can include or store a user prompt function 602, pre-stored diagnosis levels 604, one or more diagnosis process(es) 606, a recall lookup function 608, a repair data integration function 610, a catalog integration function 612, a parts recommendation function 614, and/or a parts ordering function 616.

The user prompt function 602 can be utilized to facilitate communications with vehicle owners and/or collect information from vehicle owners pertaining to service requests. In some embodiments, the user prompt function 602 can request that a vehicle owner input information regarding the vehicle and/or the anticipated repair. For example, the vehicle owner can provide the year, make, and/or model of the vehicle. By way of further example, the vehicle owner can input that the vehicle is being brought in for an oil change or other service. In some embodiments, user prompt function 602 can be used to ingest complaints about the vehicle from the vehicle owner or user. In other examples, the user prompt function 602 to communicate with a vehicle owner to notify him or her that the shop is still working to diagnosis vehicle issues and that additional time is needed.

The vehicle diagnostic system 155 can be configured to execute one or more diagnosis processes 606 to analyze a state of a vehicle and/or diagnose actual or potential issues that require attention or repair. In some instances, the diagnosis processes 606 may be performed manually by a technician performing a manual inspection and/or may utilize automotive diagnostic software and equipment that interfaces with a vehicle's onboard diagnostic (OBD) system to access the vehicle's electronic control units (ECUs), retrieve diagnostic trouble codes (DTCs), and/or analyze sensor data to detect malfunctions or diagnose specific issues within the vehicle's various systems

(e.g., engine, transmission, brakes, emissions control, and/or other systems). In some embodiments, this automotive diagnostic software may be integrated with the site controller application 115 (FIG. 1A, FIG. 1B). In other embodiments, this automotive diagnostic software may be installed on separate equipment or devices that communicate with the site controller application 115, and which are configured to transmit diagnostic testing results to the site controller application 115.

In certain embodiments, the diagnosis processes 606 may be utilized to assess a vehicle based on one or more pre-stored diagnosis levels 604, each of which can be customized according to a site's preferences or processes. In some examples, a first diagnosis level 604 can correspond to a diagnosis process 606 that includes checking DTC codes, checking gas caps, and/or checking battery terminals, a second diagnosis level 604 can be used when numerous overlapping DTC codes and/or electrical issues are observed with the vehicle, a third diagnosis level 604 can be used when intermittent issues have occurred that are not readily apparent, and a fourth diagnosis level 604 can be used when the shop is unable to make determinations regarding the vehicle. Each of the diagnosis levels 604 are associated with time commitments and costs, and they do not guarantee a final diagnosis result. The vehicle diagnostic system 155 can facilitate selection of the diagnosis processes 606 and/or diagnosis level(s) 604 that are applied to each of the service requests, and can store and associate this information with the service request information managed by the site controller application 115 (FIG. 1A, FIG. 1B). In some embodiments, the diagnosis process 606 can include using a DTC decoder to interpret DTC codes and provide repair data relevant to the P-Code to commence the part recommendation process.

In some embodiments, a pre-approval process can be put in place for vehicle diagnostic system 155. The pre-approval process can be put in place to maximize efficiency of the diagnostic system 155. In some embodiments, the pre-approval process can require a technician to obtain approval from the vehicle service site 105 prior to commencing the diagnosis process 606.

The manner in which the diagnosis processes 606 are performed on vehicles and the way in which the system communicates with vehicle owners in connection with servicing vehicles can vary. In some embodiments, the diagnostic process may involve one or more of the following: i) technicians or camera devices capturing images and videos of vehicle components, categorizing their state as good, caution, or critical; ii) technicians making notes and recommendations via an edge device (e.g., mobile phone or tablet); iii) technicians accessing repair information, catalog data, and part recommendations in real-time during inspection; iv) technicians verifying fixes for caution or critical issues during diagnosis, potentially expediting the process; v) technicians performing physical inspections, such as checking the air filter under the hood; vi) technicians refining diagnostic results and digitally transmitting them to vehicle owners; vii) vehicle owners interacting with digital reports to approve or deny recommendations, message service advisors, and/or make payments; and/or viii) the diagnostic system automatically entering identified replacement needs (e.g., air filter) and initiating part sourcing processes.

The recall lookup function 608 of vehicle diagnostic system 155 can be configured to determine whether any recalls have been issued for a vehicle under inspection. In some embodiments, the existence of a recall for a vehicle needing a service or repair can increase diagnosis level 604 for the vehicle. In some embodiments, the existence of a recall for a vehicle needing a service or repair can result in a more in-depth diagnosis process 606 relating to the subject matter of the recall.

The repair data integration function 610 of vehicle diagnostic system 155 can use DTC codes, inspection results, and/or technician notes from the inspection to look up repair data. The repair data integration function 610 can be used to predict or recommend a required part or service. The repair data provided by the repair data integration function 610 can access catalog data to make a part recommendation for one or more services.

The catalog integration function 612 of vehicle diagnostic system 155 can be used by the system to recommend a part without interfering with the technician's work-flow or the inspection process. A digital catalog can be called in the background and used to run searches using automatic filtering. Results can be prioritized and presented via a user interface. In some embodiments, only one search result may be provided if the result is obtained with a high level of confidence, while search results may be provided in other scenarios. A confidence feedback loop can be provided by the catalog integration feature 612 to provide more accurate results in the future.

The parts recommendation function 614 of the vehicle diagnostic system 155 can use historical data to provide a recommendation for parts to be ordered for the vehicle during the inspection process (as well as corresponding services for installing those parts). The parts recommendation function 614 may suggest additional or related components that are typically replaced alongside the primary parts identified for the repair. This can help ensure a more comprehensive service by addressing potential future issues or improving overall system performance. In some embodiments, the parts recommendation function 614 can consider historical data including average delivery times for the supplier for the recommended part. In some embodiments, a weighted optimization can be used to select a part or supplier. In some embodiments, a supplier can provide an estimated delivery time for a part. The estimated delivery time for the part can be weighted with actual delivery times of the supplier for the same or similar parts. The parts recommendation function 614 can provide a confidence level with a time estimate based on the estimated delivery time for the part provided by the supplier and actual delivery times met by the supplier for the same or similar parts. Parts recommendation function 614 can prioritize the recommendation of parts or suppliers that regularly meet or exceed expected delivery times.

The parts recommendation function 614 can populate a search using information captured in the check-in, diagnosis, and/or inspection processes to determine or confirm the used parts. In some embodiments, parts recommendation function 614 of vehicle diagnostic system 155 can include a fluid level lookup feature. The fluid lookup feature can recommend a fluid or other commodity from a catalog. In some embodiments, the fluid lookup feature can allow a customer, technician, or service advisor to order fluid or another commodity during the inspection process. The parts recommendation function 614 also can be configured to obtain information relating to the fluid, as diagnosed in the diagnosis process 606, from a catalog to allow for re-ordering of the fluid during the inspection process.

The parts ordering function 616 of vehicle diagnostic system 155 can include a user interface that allows the technician, the service advisor, vehicle owner, and/or other individual to review a service estimate and recommend parts. In some embodiments, the service advisor, the technician, or the vehicle owner can approve or verify the parts that are going to be ordered. In some embodiments, the user interface can present the suggested parts in an order based on lead time, customer reviews of a part, and/or cost. In other embodiments, the service advisor, the technician, or the customer can add, remove, or change parts on the list of recommended parts. In some embodiments, the recommendation provided by the parts ordering function 616 can be presented to the technician, service advisor, or customer while the inspection is on-going so that the parts can be ordered to reduce the lead time between the diagnosis of an issue and the time (i) that a replacement part is identified to repair the issue, and (ii) that the part used to repair the issue is in the possession of the shop.

Traditionally, the process for identifying, sourcing, and ordering appropriate vehicle parts for a service request is performed manually and tends to be time-consuming. As demonstrated above, the site controller application 115 (FIG. 1A, FIG. 1B) is able to collect diagnostics information pertaining to service request (e.g., which may be collected via automated diagnostic equipment and/or physical inspections performed by technicians) and automatically identify vehicle part orders for the service request based on the collected information. In doing so, the site controller application 115 (FIG. 1A, FIG. 1B) can access store vehicle data to ensure the sourced parts are compatible with particular vehicle type that is the subject of the service request. Additionally, in the event multiple vehicle parts can be used for a given service request, the site controller application 115 (FIG. 1A, FIG. 1B) can use confidence scoring functions to predict the most suitable part based on vehicle owner preferences and/or vehicle site preferences (e.g., based on factors such as cost-effectiveness, quality ratings, customer preferences for premium or economy parts, historical performance data, compatibility with specific vehicle models, availability and delivery times, warranty coverage, rebates, and alignment with shop policies or preferred supplier agreements). This streamlined sourcing and ordering functionality can significantly reduce the time traditionally spent to secure vehicle parts and enables the sourcing of parts to be customized according to desired preferences.

Returning to FIG. 1B, the site controller application 115 also may include an AI decision engine 156. The AI decision engine 156 can be configured to enhance and optimize decision-making processes within vehicle service environments. The AI decision engine 156 serves as the localized intelligence hub for each vehicle service site 105 (FIG. 1A, FIG. 2), integrating data from various sources to generate informed, real-time decisions that improve operational efficiency, resource allocation, and overall service quality at vehicle service sites 105 (FIG. 1A, FIG. 2).

The AI decision engine 156 can be configured to access the knowledge and data obtained from multiple components to inform its decision-making processes. In some examples, it may analyze data from the computer vision system 152 to understand the current state of the service bays, including vehicle positions, technician activities, and equipment usage. Additionally, information from IoT devices 106 (FIG. 1A, FIG. 2) may provide real-time updates on asset locations, environmental conditions, and equipment status. The asset management system 153 may feed data about inventory levels, tool availability, and technician schedules into the AI decision engine 156. Additionally, the vehicle diagnostic system 155 may supply detailed information about each vehicle's condition, required services, and estimated repair times. By synthesizing this diverse array of inputs, the AI decision engine 156 can make holistic, data-driven decisions with to respect to scheduling service requests that consider all aspects of the service environment.

In some embodiments, the AI decision engine 156 may employ machine learning algorithms to continuously improve its decision-making capabilities. For example, it may analyze historical data to identify patterns in service times, technician performance, and customer satisfaction, using these insights to refine its scheduling and resource allocation strategies over time. The engine may also adapt to unexpected events, such as emergency repairs or equipment failures, by rapidly reassessing priorities and adjusting schedules to minimize disruptions to overall operations.

In some embodiments, the AI decision engine 156 may benefit from an optimization feedback loop facilitated through communication with the centralized vehicle service cloud platform 130 (FIG. 1A, FIG. 2). This cloud-based platform may aggregate data and insights from numerous similar vehicle service sites 105, creating a vast repository of knowledge that can inform and enhance the decision-making processes of individual AI decision engines 156 at specific vehicle service sites 105 (FIG. 1A, FIG 2). By tapping into this collective intelligence, each AI decision engine 156 may learn from the experiences and best practices of other sites, potentially identifying innovative solutions or optimizations that may not be apparent from local data alone. This continuous exchange of information between the edge-based AI decision engines and the centralized cloud platform may foster a system-wide improvement in operational efficiency and service quality across all connected vehicle service sites 105.

The configuration of the AI decision engine 156 can vary. In certain embodiments, the AI decision engine 156 may be implemented using one or more machine learning models and/or one or more deep learning models. In some examples, the AI decision engine 156 can be implemented using an optimization model that includes one or more random forest models, one or more gradient boosting models, one or more SVM (support vector machine) models, one or more feedforward or recurrent neural network models, one or more reinforcement learning models, one or more decision tree models, and/or a combination thereof. The AI decision engine 156 can be implemented in other means as well.

The site controller application 115 also may include a payment system 158. The payment system 158 can be configured to facilitate payment for vehicle service requests and replacement parts. In certain embodiments, the payment services can be facilitated by the centralized vehicle service cloud platform 130 (FIG. 1A, FIG. 2) and the edge devices 110 (FIG. 1A, FIG. 2) may communicate with the centralized vehicle service cloud platform 130 to transact payments using a secure communication protocol.

While the components of the site controller application 115 are illustrated in FIG. 1B as distinct functions or components, it should be understood that the functionalities of these components can be combined or distributed in various ways. The specific arrangement and division of functions shown in FIG. 1B is provided for illustrative purposes and should not be construed as limiting. In practice, the functions of two or more components may be integrated into a single module or process, or the functions of a single component may be distributed across multiple devices or processes. For example, aspects of the asset management system 153 and the AI Decision Engine 156 may be integrated with the scheduling system 157 in some embodiments. Furthermore, these functions may be performed by one or more physical devices, such as edge devices, local servers, cloud servers, or a combination thereof. The actual implementation may vary based on factors such as the specific requirements of the vehicle service site 105 (FIG. 1A, FIG. 2), available hardware resources, desired performance characteristics, and system scalability needs.

FIG. 2 is a network diagram illustrating a centralized vehicle service cloud platform 130 connected to a plurality of vehicle service sites 105. One or more edge devices 110 (e.g., edge terminals or servers) are installed at each vehicle service site 105 and are in communication with the centralized vehicle service cloud platform 130 over a private network connection. Various IoT devices 106 and/or electronic devices 110A (e.g., laptops, mobile devices, desktop computers, etc.) located at a vehicle site may be coupled to the one or more edge devices 110 over a local network. The edge devices 110 located at each vehicle service site 105 can be configured to execute the site controller application 115 described throughout this disclosure.

One or more vehicle site databases 154 may be maintained at each vehicle service site 105. The one or more vehicle site databases 154 may be stored on one or more edge devices 110 located at each vehicle service site 105.

The site controller application 115 (FIG. 1A, FIG. 1B) executed by one or more edge devices 110 may future include, or communicate with, one or more vehicle site databases 154. The vehicle site databases 154 associated with each instance of the site controller application 115 may store information specific to a corresponding vehicle service site 105 where the edge device(s) 110 running the site controlling application are located. In some examples, a vehicle site database 154 may store the site layout information, technician information, service request information, and/or other information for a given vehicle service site 105 location. The vehicle site database 154 also may store data generated or collected by the various components of the site controller application 115 (e.g., the IoT controller 151 (FIG. 1B), computer vision system 152 (FIG. 1B), asset management system 153, vehicle diagnostic system 155, AI decision engine 156, scheduling system 157, and/or payment system 158.

While the vehicle site databases 154 may be stored locally on premises at each vehicle service site 105, the edge network configuration enables the centralized vehicle service cloud platform 130 to access any desired data from these databases. This architecture allows the centralized vehicle service cloud platform 130 to retrieve and analyze information from various service site locations, facilitating global analytics and enhancing functionalities across the entire network. By leveraging this distributed yet interconnected system, the platform may perform comprehensive data analysis, identify trends, and implement improvements that benefit all connected vehicle service sites 105, while permitting the majority of processing operations to be conducted locally at each site.

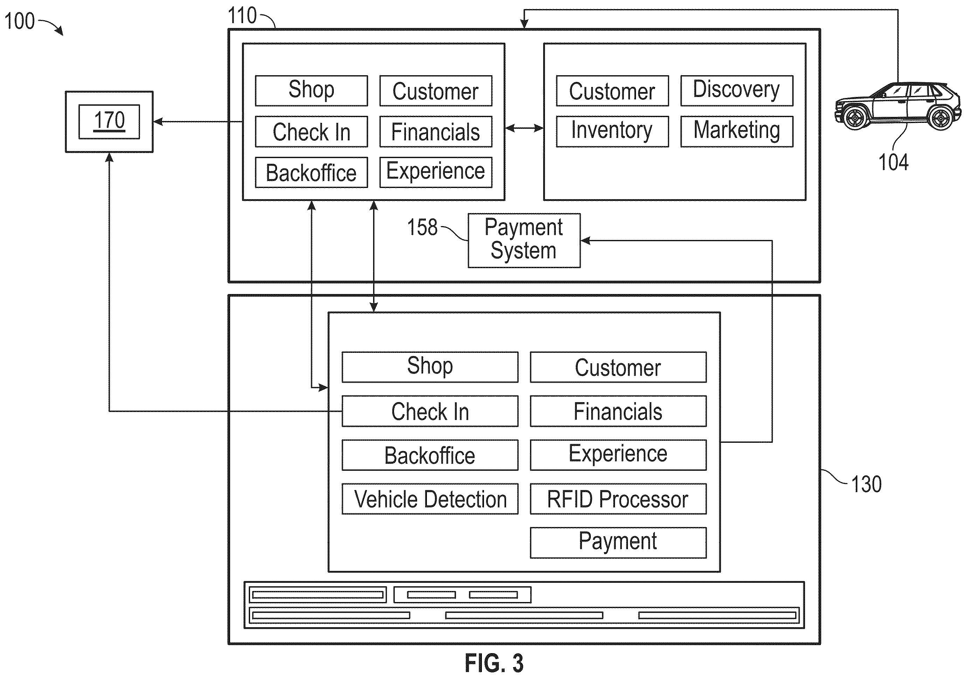

FIG. 3 illustrates an exemplary architecture of a vehicle service system 100 according to certain embodiments. This configuration demonstrates one technique for allocating components between a centralized vehicle service cloud platform 130 and an edge device 110. In this exemplary configuration, the edge device 110 stores components that facilitate local operations at a vehicle service site 105 (FIG. 1A, FIG. 2), while the centralized vehicle service cloud platform 130 stores components for more global operations.

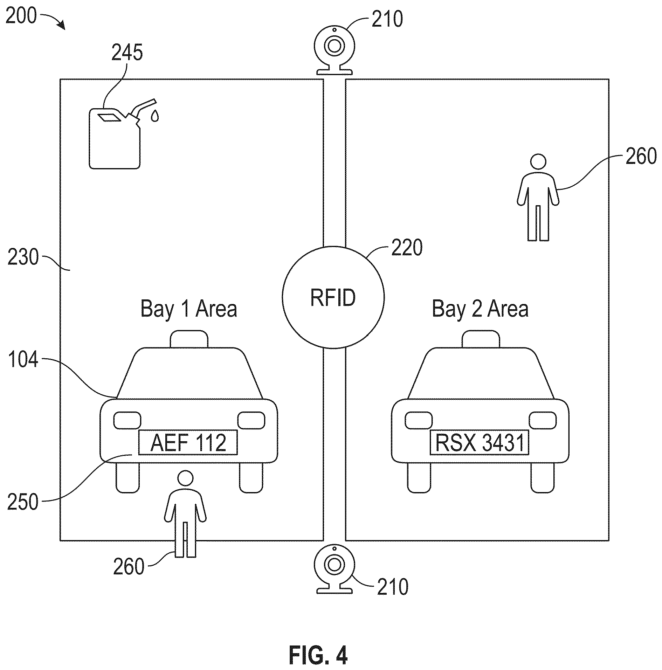

The edge device 110 can store various components of the site controller application 115 (FIG. 1A, FIG. 1B) described throughout this application (e.g., including components corresponding to the asset management system 153, vehicle diagnostic system 155, scheduling system 157, payment system 158, back office management system, etc.). As new vehicles 104 (FIG. 4) are brought into a vehicle service site 105, the majority of processing operations involved with fulfilling service requests for the vehicles 104 can be performed locally on the edge device 110, thereby avoid network latencies and enhancing real-time processing capabilities at each vehicle service site 105. This localized processing approach allows for rapid decision-making and immediate responses to service requests, optimizing the overall efficiency of the vehicle service operations at the vehicle service sites 105.

In certain embodiments, the centralized vehicle service cloud platform 130 may host the computer vision system 152 (FIG. 1B), which performs critical functions such as vehicle detection, asset tracking, etc. Given the computationally intensive nature of the processing operations executed by the computer vision system 152, hosting it on the centralized platform offers several advantages. The cloud server environment provides scalability and efficiency, enabling timely execution of the computer vision system's functions. Furthermore, this centralized architecture streamlines the update process for the computer vision system 152. Updates can be implemented at a single location, eliminating the need to distribute and install updates across multiple edge devices 110 at various vehicle service sites 105 (FIG. 1A, FIG. 2). This approach enhances system maintenance and ensures consistent performance across the network.

In some embodiments, an access control system 170 operates to control access to the centralized vehicle service cloud platform 130 by the edge devices 110 connected to the network. The access control system 170 may be configured with CIAM (customer identity and access management) capabilities, which includes a system or framework that manages the identity, authentication, and access of edge devices 110 across the network.

In certain embodiments, the access control system 170 may perform various functions to ensure secure and efficient access to the centralized vehicle service cloud platform 130. It may verify the identity of users, such as service technicians, managers, or administrators, through various methods including multi-factor authentication, biometric verification, or secure token-based systems. Edge devices 110 and other hardware components may be authenticated before being granted access to the centralized platform, ensuring that only authorized equipment can connect to and interact with the system. The access control system 170 may assign and manage user roles and permissions, ensuring that individuals have access only to the specific data and functionalities required for their job functions. The access control system 170 may maintain detailed logs of all access attempts and activities, facilitating security monitoring and compliance with relevant regulations. For integrations with third-party systems or external applications, the access control system 170 may provide secure API gateways and management tools to control and monitor data exchange. The system may implement end-to-end encryption for data in transit and at rest, safeguarding sensitive information as it moves between edge devices 110 and the centralized platform. Additionally, the access control system 170 may employ context-aware authentication mechanisms that adjust security requirements based on factors such as user location, device type, or time of access. By implementing these and/or other access control measures, the system can maintain the security and integrity of the centralized vehicle service cloud platform 130 while ensuring that authorized users and edge devices 110 can efficiently access the resources they need to perform their functions effectively.

FIG. 4 illustrates a vehicle service environment 200 of a vehicle service site 105 in accordance with certain embodiments. Various IoT devices 106 (FIG. 1A, FIG. 2), such as one or more sensors, one or more camera devices 210, one or more RFID scanners 220, and/or other devices, can be installed or located in service bay areas 230 of the vehicle service environment 200. The IoT devices 106 can be utilized to track and/or monitor vehicles 104, vehicle fluids or parts 245, equipment, tools, technicians 260 and/or other entities located in the service bay areas 230 (or other portions of the vehicle service environment 200).

In some embodiments, during fulfilment of a service request for a vehicle 104, one or more camera devices 210 can be used to capture a location of a vehicle 104, a license plate 250 of the vehicle, vehicle fluids or parts 245 used in servicing the vehicle 104, tools or equipment used in servicing the vehicle 104, and/or any technicians 260 working on the service request. As described above, the camera devices 210 can include, or communicate with, a computer vision system 152 (FIG. 1B) configured to analyze images received from the camera devices 210, e.g., to detect the movement of people, vehicles, and equipment throughout the vehicle service environment 200. The computer vision system 152 can be trained to recognize and detect objects corresponding people, vehicles, vehicle fluids or parts, tools, equipment, and other articles commonly found in automotive service environments.

The computer vision system 152 (FIG. 1B) can detect various information about a service request and operations in a vehicle service environment 200. In some embodiments, the computer vision system 152 can be configured to perform some or all of the following functions:
- detect objects corresponding people, vehicles, vehicle fluids or parts, tools, equipment, and other articles located in service bay area;
- detect specific equipment or tools currently being used to service a vehicle;
- detect specific fluids or replacement parts being used to service a vehicle;
- detect the type of service being performed on the vehicle;
- detect a current stage of an ongoing service (e.g., initiated, middle, or complete);
- recognize the difference between a damaged vehicle and a repaired vehicle
- execute license plate recognition (LPR) functions to capture and read vehicle license plates;
- execute facial recognition functions to detect the presence of specific individuals located in service bay areas; and/or
- detect unusual behaviors, malfunctions, or safety hazards (e.g., smoke or fire in service bay areas).

In some embodiments, the audio received from the camera devices 210 (or other IoT devices 106 equipped with audio sensors) also can be analyzed and interpreted to glean additional information about the vehicle service environment 200. For example, camera devices 210 can capture the audio associated with the operation of certain tools, conversation among the technicians, or the breaking of glass. An audio analysis system and/or natural language processing (NLP) system be configured to analyze the captured audio and extract relevant information pertaining to the vehicle service environment 200 and/or ongoing service requests within the vehicle service environment 200.

RFID scanners 220 can be strategically positioned throughout the vehicle service environment 200 to provide real-time tracking and monitoring capabilities. These scanners may detect and read RFID tags attached to various assets, including vehicles, tools, equipment, replacement parts, and/or personnel badges. By continuously scanning the environment, the RFID scanners 220 can track the movement and location of tagged items, enabling efficient asset management and workflow optimization. For example, RFID scanners 220 may monitor when specific tools enter or leave a service bay, track the duration of a vehicle's stay in a particular area, or log the presence of technicians 260 in different zones of the shop. This data can be integrated with the site controller application 115 (FIG. 1A, FIG. 1B) to provide valuable insights into resource utilization, service progress, scheduling issues, and overall shop efficiency.

In some embodiments, XR headsets and other wearable devices also can be utilized in the vehicle service environment 200. Assessments of technicians 260 can be carried out on XR headsets to inform the vehicle service system 100 of the relative skill of the technician on each service need historically encountered by the vehicle service system 100. In some embodiments, the vehicle service system 100 can incorporate the results of the technician assessment to dispatch each technician 260 in the system based on the relative skills of the technician 260 and their aptitude to address the anticipated service needs for the vehicles scheduled on a given shift.

The data collected by the IoT devices 106 (FIG. 1A, FIG. 2) in FIG. 4, including camera devices 210 and RFID scanners 220, can be utilized by various components of the site controller application 115 (FIG. 1A, FIG. 1B) to optimize operations at the vehicle service site 105 (FIG. 1A, FIG. 2). The IoT controller 151 (FIG. 1B) may process and analyze this data, extracting valuable information about the status of service bays, locations of vehicles, technicians, tools, and equipment. This processed data can then be fed into other components of the site controller application 115, enabling real-time decision-making and operational improvements.

In some examples, the scheduling system 157 (FIG. 1B, FIG. 6) may leverage this IoT data to dynamically adjust and optimize service schedules. For example, if camera devices 210 detect that a service bay has become available earlier than expected, the scheduling system 157 can automatically reassign technicians or reschedule upcoming service requests to maximize bay utilization. Similarly, the asset management system 153 (FIG. 1B, FIG. 5) may use RFID scanner(s) 220 data to track the real-time locations and usage of tools, equipment, and parts. This information can be used to optimize inventory management, ensure timely availability of necessary resources for scheduled services, and even trigger automated reordering of parts when stock levels fall below predetermined thresholds. By integrating this real-time IoT data, the site controller application 115 may significantly enhance operational efficiency, reduce downtime, and improve overall productivity at the vehicle service site 105.

A method can include connecting, over a network, an edge device located at a vehicle service site to a centralized vehicle service cloud platform, the edge device executing a site controller application configured to track and manage operations at the vehicle service site. The method further can include configuring one or more IoT devices located at the vehicle service site to capture monitoring data corresponding to service bay usage, equipment, vehicle parts, and technicians located at the vehicle service site. The method also can include receiving, at the edge device from the IoT devices, the monitoring data for usage by the site controller application. The method also can include receiving, by the site controller application executed by the edge device, a service request for a vehicle at the vehicle service site. The method also can include generating a schedule for the vehicle service site based at least on the monitoring data received from the IoT devices. The method also can include dynamically updating the schedule for the vehicle service site based on updates to the monitoring data.

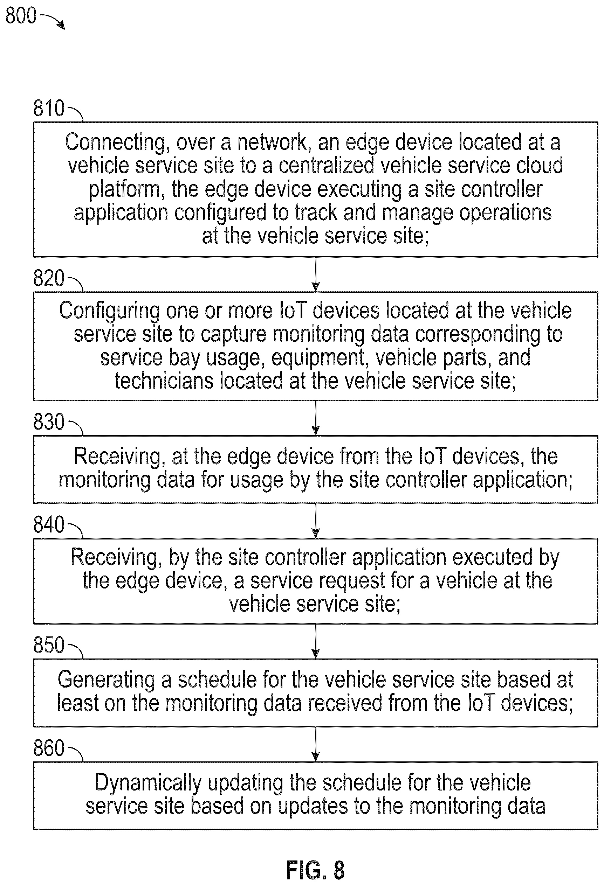

FIG. 8 illustrates a flow chart for a method 800 according to certain embodiments. Method 800 is merely exemplary and is not limited to the embodiments presented herein. Method 800 can be employed in many different embodiments or examples not specifically depicted or described herein. In some embodiments, the steps of method 800 can be performed in the order presented. In other embodiments, the steps of method 800 can be performed in any suitable order. In still other embodiments, one or more of the steps of method 800 can be combined or skipped. In many embodiments, vehicle service system 100, edge device 110, and/or site controller application 115 as shown in FIGs. 1-4 can be configured to perform method 800 and/or one or more of the steps of method 800. In these or other embodiments, one or more of the steps of method 800 can be implemented as one or more computer instructions configured to run at one or more processing device(s) 102 and configured to be stored at one or more non-transitory computer storage devices 101 as shown in FIG. 1B. Such non-transitory memory storage devices 101 can be part of a computer system such as vehicle service system 100 and/or edge device 110. The processing device(s) 102 can be similar or identical to the processing device(s) 102 described above with respect to vehicle service system 100 and/or edge device 110.

In step 810, method 800 can include connecting, over a network, an edge device located at a vehicle service site to a centralized vehicle service cloud platform, the edge device executing a site controller application configured to track and manage operations at the vehicle service site.

In step 820, method 800 can include configuring one or more IoT devices located at the vehicle service site to capture monitoring data corresponding to service bay usage, equipment, vehicle parts, and technicians located at the vehicle service site.

In step 830, method 800 can include receiving, at the edge device from the IoT devices, the monitoring data to the edge device for usage by the site controller application.

In step 840, method 800 can include receiving, by the site controller application executed by the edge device, a service request for a vehicle at the vehicle service site. In some embodiments, the site controller application also can store one or more of site layout information, technician information, or service request information. In some embodiments, the method can include generating a signature for the vehicle based on one or more of the monitoring data or information entered by a user in a complaint. In some embodiments, the signature can be a complaint-finding signature. In some embodiments, the method can include retrieving cases that are similar to the service request. In some embodiments, the method also can include providing outputs based on one or more of the complaint, the monitoring data, or the cases that are similar to the service request. In some embodiments, the outputs can include on or more of candidate parts, associated parts, success likelihoods, or expected installation times.

In step 850, method 800 can include generating a schedule for the vehicle service site based at least on the monitoring data received from the IoT devices. In some embodiments, method 800 also can include generating a signature for the vehicle based on the information entered by the user in the complaint and/or data received from the IoT devices. Method 800 further can include retrieving similar cases. Method 800 further can include providing outputs (e.g. candidate parts, associated parts, success likelihoods, expected installation times) based on the complaint, data received from the IoT devices, and/or similar cases. Method 800 also can include generating a schedule for a specific technician. In some embodiments, the schedule can be dynamically adjusted in real-time. In some embodiments, the schedule can be updated according to one or more of data from the site controller application or monitoring data.

In step 860, method 800 can include dynamically updating the schedule for the vehicle service site based on updates to the monitoring data.

In some embodiments, a method can include receiving a service request for a vehicle. The method also can include analyzing the vehicle. Analyzing the vehicle can include identifying a type of the vehicle. Analyzing the vehicle also can include identifying a condition of the vehicle. Analyzing the vehicle further can include comparing the type of the vehicle and the condition of the vehicle to historical data to generate comparison information. The method further can include generating a sourcing plan. The sourcing plan can include identifying one or more vehicle parts used for the service request based at least on the comparison information. The sourcing plan also can include executing an automated sourcing function to source the one or more vehicle parts used for the service request. The method also can include facilitating an order for the one or more vehicle parts as identified.

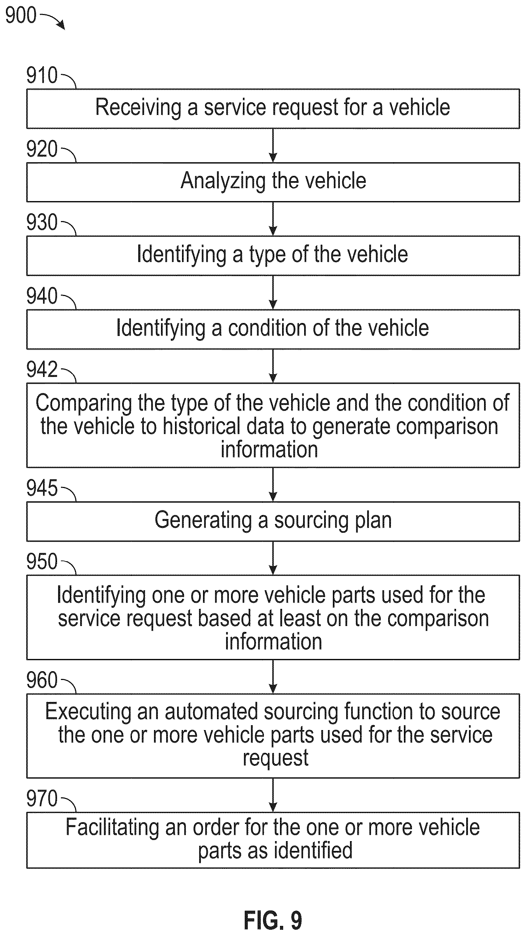

FIG. 9 illustrates a flow chart for a method 900 according to certain embodiments. Method 900 is merely exemplary and is not limited to the embodiments presented herein. Method 900 can be employed in many different embodiments or examples not specifically depicted or described herein. In some embodiments, the steps of method 900 can be performed in the order presented. In other embodiments, the steps of method 900 can be performed in any suitable order. In still other embodiments, one or more of the steps of method 900 can be combined or skipped. In many embodiments, vehicle service system 100 and/or site controller application 115 as shown in FIGs. 1-4 can be configured to perform method 900 and/or one or more of the steps of method 900. In these or other embodiments, one or more of the steps of method 900 can be implemented as one or more computer instructions configured to run at one or more processing device(s) 102 and configured to be stored at one or more non-transitory computer storage devices 101. Such non-transitory memory storage devices 101 can be part of a computer system such as vehicle service system 100 and/or edge device 110. The processing device(s) 102 can be similar or identical to the processing device(s) 102 described above with respect to vehicle service system 100 and/or edge device 110.

Method 900 of FIG. 9 can include a step 910 of receiving a service request for a vehicle. In some embodiments, the service request can include a general description of the anticipated service need for the vehicle (e.g., requesting routine maintenance or an oil change, requesting auto body repair after an accident, or requesting diagnostics to be run). In other embodiments, the service request can include information from a customer profile (e.g. customer name, VIN, history of vehicle repairs, year, make, model of vehicle). The service request can be input to, or received by, an edge device 110. In some embodiments, a camera can be used to identify one or more of the type of the vehicle, a first location of the vehicle, or a second location of the vehicle. In some embodiments, the customer profile can be associated with a vehicle. In some embodiments, the customer profile can provide a level of flexibility of a customer for a service completion time. In some embodiments, the customer profile can provide a history of past services received by the vehicle or the customer.

Method 900 also can include a step 920 of analyzing the vehicle. Analyzing the vehicle can include a step 930 of identifying a type of the vehicle. The type of the vehicle can include information relating to the year, make, and/or model of the vehicle. In some embodiments, the type of the vehicle can be determined from the service request for the vehicle. In other embodiments, the type of the vehicle can be determined from a customer profile associated with the vehicle. In some embodiments, the step 920 of analyzing the vehicle can be performed using one or more of sensor(s), camera device(s) 210, RFID scanner(s) 220, technician(s) 260, a diagnostic tool, or computer vision task(s). In other embodiments, the type of the vehicle can be identified using images captured camera(s) and computer vision tasks executed on the images. In other embodiments, the type of the vehicle can be determined manually by a technician inputting the information including the year, make, and/or model of the vehicle.

The step 920 of analyzing the vehicle also can include a step 940 of identifying a condition of the vehicle. In some examples, the condition of the vehicle can indicate whether the vehicle needs routine service or has been in an accident and in need of repairs. In some embodiments, the condition of the vehicle can be determined from the service request for the vehicle. In other embodiments, the condition of the vehicle can be determined from a customer profile associated with the vehicle. In other embodiments, the condition of the vehicle can be determined using an automated diagnostic tool. In other embodiments, the condition of the vehicle can be determined through a manual, visual inspection performed by a technician. In other embodiments, the condition of the vehicle can be determined using camera(s) and computer vision tasks. The condition of the vehicle can include a physical condition of the vehicle, age of the vehicle, year of the vehicle, make of the vehicle, model of the vehicle, mileage of the vehicle, notes on the vehicle, vehicle generational grouping, commonality of known issues, recalls, color, trim level, and/or technical service bulletins. Notes on the vehicle can include notes from previous repairs, notes from customer complaints, recall information, and warranty information.

The step 920 of analyzing the vehicle also can include a step 942 of comparing the type of the vehicle and the condition of the vehicle to historical data to generate comparison information. Historical data can include service needs for a vehicle based on the condition of the vehicle. In some embodiments, historical data can include part failure thresholds for a vehicle based on the condition of the vehicle. In some embodiments, historical data can be determined from a vehicle identification number (VIN). Historical data can associate the VIN with information about the part or service request including the part used for a repair, the supplier of the part, the store in which the part was installed, the time of delivery. Historical data can be updated if the specific VIN arrives at the shop or another shop in the system. If the VIN arrives for service of a part that was previously replaced by the shop or another shop in the system, the historical data can be updated to include information relating to the problem with the part which caused the VIN to return to the shop or another shop in the system. The historical data can include a part fingerprint which includes the data associated with the VIN. The historical data can be used to influence parts recommendation function 614, for example, if a part is returning for service faster than it should, parts recommendation function 614 will be more likely to recommend parts with a lower level of recurring service needs as compared to parts with a higher level of recurring service needs as seen by the shop or other shops in the system. The historical data observed by the shop or another shop in the system can be used in conjunction with good, better, best profiles for the part provided by the part vendor. Historical data can include information regarding different generation parts within a subset of a vehicle make based on the year or model. Historical data can include data from prior repairs and outcomes from the shop. In some embodiments, historical data can include data from prior repairs and outcomes globally across all shops in the system. Historical data can be used to compare the condition of the vehicle to past cases to generate comparison information with a high degree of certainty. In some embodiments, the historical data can include a complaint finding signature. The complaint finding signature can include a thread of historical data to identify service trends for a year, make, or model of a vehicle. The comparison information can be generated without human interruption. If the comparison information is generated with a low degree of certainty, a user can be prompted to enter additional information regarding the condition of the vehicle or to accept or deny the comparison based on the user's review of the condition of the vehicle, the historical data, or the comparison information.

Method 900 also can include determining a location of the technician. The location of the technician can include a location within the shop. The location within the shop can include in a service bay or in a designated break area. The method 900 can include optimizing the location of the technician based on one or more of a skill of the technician or a relative service need. In some embodiments, a shop schedule may be optimized by positioning a technician with a particular skill to work in a service bay with a vehicle requiring that particular skill.

Method 900 also can include providing delivery tracking information for a delivery of the one or more vehicle parts or equipment. The method 900 also can include monitoring a deviation from an expected delivery date. Method 900 also can include prompting an update to a shop schedule based on the deviation from the expected delivery date.

Method 900 also can include a step 945 of generating a sourcing plan. The sourcing plan can include part and supplier information. The sourcing plan can consider estimated delivery times for a part or supplier. The sourcing plan also can consider one or more of part fitment, part reliability, technician skill in replacing a part, part cost, or historical data. The sourcing plan also can consider equipment availability. In some embodiments, a tag reader or other tool can be used to determine the availability of the equipment. In some embodiments, the one or more vehicle parts can be recommended based on one or more of the geographical location of the vehicle, a cost of the one or more vehicle parts or equipment, or a lead time for the one or more vehicle parts or equipment.

The step 945 of generating the sourcing plan also can include a step 950. In step 950, diagnostic information is determined that identifies one or more vehicle parts used for the service request. The one or more vehicle parts used for the service request can be identified based at least on the comparison information. A predictive model can be used to predict the one or more vehicle parts used for the service request based at least in part on the comparison information. Step 950 can be part of a sourcing plan. In some cases, the diagnostic information can be obtained using specialized diagnostic software and/or equipment that interfaces with the vehicle's onboard computer. Additionally, or alternatively, the diagnostic information can manually input by a technician or other user.

The step 945 of generating the sourcing plan also can include a step 960. In step 960, an automated sourcing function is executed to source the one or more vehicle parts used for the service request. The sourcing function can include creating a search string based on one or more of the condition of the vehicle, historical data, comparison information, scheduling, part availability, technician availability, estimated delivery time, or price. In some embodiments, the vehicle part identified by the sourcing function can be ordered by one or more third party suppliers. In some embodiments, the vehicle part identified by the sourcing function can be available and processed in-house. In some embodiments, the search string can be generated automatically. In some embodiments, the search string can be provided or modified by a user. In some cases, the site controller application 115 can store or access a database that identifies a catalog of available vehicle parts and/or information that identifies acceptable vehicle parts for various types of vehicle models. Step 960 can be part of the sourcing plan. The site controller application 115 (FIG. 1A, FIG. 1B) can cross-reference the information about the vehicle type (obtained in step 930) with the database information to identify one or more compatible vehicle parts for the vehicle that is the subject of the service request. In some cases, there may be multiple vehicle parts that can be utilized for the service request, and the site controller application 115 can select or recommend a vehicle part based on preference criteria (e.g., based on the expected delivery dates of the parts, preferences for economical parts or premium parts, etc.). In some embodiments, the automated sourcing function can generate a ranked, explainable sourcing plan based on the optimization of multiple objectives. The ranking of a part or supplier can be updated based on observed performance of the part or supplier over time. In some embodiments, the ranking of a part or supplier can be updated with improved data in near real time. The objectives can include fitment, delivery time, ETA reliability, cost, associated parts, technical efficiency, and shop policy. Fitment can include the ability of a part designated for a certain vehicle, make, and/or model to be used with another vehicle, make, and/or model. For example, a brake pad for one vehicle can be used with several other vehicles even though it was specifically made for the one vehicle. In some embodiments, fitment can be determined from catalogue data. In some embodiments, the catalogue data can be curated by suppliers. In some embodiments, fitment can be determined by the shop or network of shops. The shop or network of shops can collect fitment data by observing the use of a part on a vehicle other than the vehicles for which the part is designated. First-time fix can be improved through fitment, or similarity-driven part sourcing and auto-kitting.

In step 970, an order is facilitated to obtain the one or more vehicle parts as identified. The one or more vehicle parts may be used for the service request. In some embodiments, the order can be automatically placed and managed. In some embodiments, a user can be prompted to place or manage the order. In some embodiments, the user can be prompted to place or manage the order if a confidence score for the selected part is below a threshold. In some embodiments, the threshold can be dynamic and based on a user tolerance or preference. In some embodiments, the threshold can be a default threshold. In some embodiments, the default threshold can be a 90% confidence score. In some embodiments, the order can be placed or managed automatically if the confidence score for the selected part is above a threshold. Step 970 can be part of the sourcing plan.

The automated sourcing function offers several key advantages over traditional part sourcing methods that are typically performed manually. By leveraging stored vehicle data and compatibility information, the system can rapidly identify and recommend parts for a given service request without requiring time-consuming manual research. This automation may significantly reduce the time and effort typically spent by technicians or service advisors in searching catalogs or contacting suppliers. The function's ability to cross-reference vehicle specifications with available parts can help avoid costly mistakes in ordering incompatible components. Additionally, the automated system may consider factors such as cost, quality ratings, and delivery times when making recommendations, potentially optimizing part selection based on predefined criteria. In some cases, the sourcing function may also integrate with inventory management systems to check on-hand stock or initiate orders automatically, further streamlining the repair process and minimizing vehicle downtime.

A method can include collecting information for a service request for a vehicle. The method further can include performing a diagnostic test to identify a problem with the vehicle. The method also can include providing a recommendation based on the problem with the vehicle, the information as collected, and historical data. The method also can include detecting one or more of people, vehicles, parts, tools, or equipment located in a service bay. The method also can include detecting a duration of use of one or more of the people, the vehicles, the parts, the tools, or the equipment used to service the vehicle. The method also can include detecting a type of service being performed on the vehicle. The method also can include categorizing the vehicle as one or more of a damaged vehicle or a repaired vehicle. The method also can include storing data comprising one or more of the information as collected, the people, the vehicles, the parts, the tools, or the equipment to append the historical data. The method also can include sharing the data across shops or vehicle service sites.

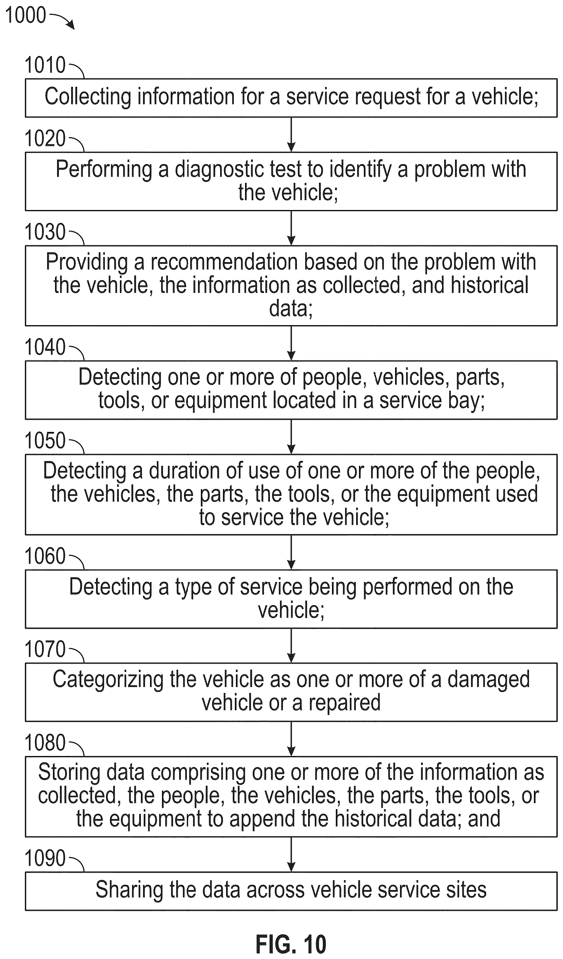

FIG. 10 illustrates a flow chart for a method 1000 according to certain embodiments. Method 1000 is merely exemplary and is not limited to the embodiments presented herein. Method 1000 can be employed in many different embodiments or examples not specifically depicted or described herein. In some embodiments, the steps of method 1000 can be performed in the order presented. In other embodiments, the steps of method 1000 can be performed in any suitable order. In still other embodiments, one or more of the steps of method 1000 can be combined or skipped. In many embodiments, vehicle service system 100 and/or site controller application 115 as shown in FIGs. 1-4 can be configured to perform method 1000 and/or one or more of the steps of method 1000. In these or other embodiments, one or more of the steps of method 1000 can be implemented as one or more computer instructions configured to run at one or more processing device(s) 102 and configured to be stored at one or more non-transitory computer storage devices 101. Such non-transitory memory storage devices 101 can be part of a computer system such as vehicle service system 100 and/or edge device 110. The processing device(s) 102 can be similar or identical to the processing device(s) 102 described above with respect to vehicle service system 100 and/or edge device 110.

Method 1000 of FIG. 10 can include a step 1010 of collecting information for a service request for a vehicle. In some embodiments, the service request can include a general description of the anticipated service need for the vehicle (e.g., requesting routine maintenance or an oil change, requesting auto body repair after an accident, or requesting diagnostics to be run). In other embodiments, the service request can include information from a customer profile (e.g. customer name, VIN, history of vehicle repairs, year, make, model of vehicle). The service request can be input to, or received by, an edge device 110. In some embodiments, a camera can be used to identify one or more of the type of the vehicle, a first location of the vehicle, or a second location of the vehicle. In some embodiments, the customer profile can be associated with a vehicle. In some embodiments, the customer profile can provide a level of flexibility of a customer for a service completion time. In some embodiments, the customer profile can provide a history of past services received by the vehicle or the customer.

Method 1000 of FIG. 10 can include a step 1020 of performing a diagnostic test to identify a problem with the vehicle. In some embodiments, the problem with the vehicle can include replacement of one or more vehicle parts (e.g., wiper blades, air filters, spark plugs, brake components, cylinders, engine components, exhaust systems, body panels, and many others). The diagnostic test can be similar or identical to diagnosis process 606 (FIG. 7).

Method 1000 of FIG. 10 can include a step 1030 of providing a recommendation based on the problem with the vehicle, the information as collected, and historical data. The recommendation can include which assets to use to fulfill the service request. Assets can include various types of equipment and tools (e.g., vehicle lifts, hydraulic jacks, pneumatic tools, diagnostic scanners, wheel alignment systems, tire mounting and balancing machines, brake lathes, engine hoists, transmission jacks, oil drains and fluid exchangers, welding equipment, air compressors, battery chargers and testers, torque wrenches, impact wrenches, socket sets, pressure gauges, coolant flush machines, fuel injection cleaning systems, exhaust gas analyzers, AC recovery and recharge stations, parts washers, headlight aim testers, and specialized manufacturer-specific tools, etc.). Technicians, other individuals, and parts also can be viewed as assets. In some embodiments, the method 1000 also can include determining a location of a replacement part available to service the vehicle. In some embodiments, the method 1000 also can include determining whether a recall has been issued for the vehicle. In some embodiments, method 1000 can use historical data to determine whether a recall has been issued for the vehicle. In some embodiments, the method 1000 also can include increasing a diagnosis level for the vehicle based on the existence of the recall. The method 1000 also can include determining a subject matter of the recall. The method 1000 also can include conducting a diagnosis process relating to the subject matter of the recall. The diagnosis process can be similar or identical to diagnosis process 606 (FIG. 7). The diagnosis level can be similar or identical to diagnosis level 604 (FIG. 7).

Method 1000 of FIG. 10 can include a step 1040 of detecting one or more of people, vehicle, parts, tools, or equipment located in a service bay. In some embodiments, the method 1000 can include executing facial recognition to detect the people located in the service bay.

Method 1000 of FIG. 10 can include a step 1050 of detecting a duration of use of one or more of the people, the vehicles, the parts, the tools, or the equipment used to service the vehicle. In some embodiments, the method 1000 can include estimating a time remaining to service the vehicle.

Method 1000 of FIG. 10 can include a step 1060 of detecting a type of service being performed on the vehicle. The method 1000 also can include detecting one or more of an unusual behavior, a malfunction, or a safety hazard in the service bay.

Method 1000 of FIG. 10 can include a step 1070 of categorizing the vehicle as one or more of a damaged vehicle or a repaired vehicle. In some embodiments, categorizing the vehicle as one or more of a damaged vehicle or a repaired vehicle can optimize downstream scheduling. In some cases, further repairs may be needed. In some cases, the repaired vehicle may be returned to its owner.

Method 1000 of FIG. 10 can include a step 1080 of storing data comprising one or more of the information as collected, the people, the vehicles, the parts, the tools, or the equipment to append the historical data. In some embodiments, the historical data can be filtered by one or more of the information collected with the data, the vehicle type for the data, the part type for the data, the tools used for the data, or the equipment used for the data.

Method 1000 of FIG. 10 can include a step 1090 of sharing the data across vehicle service sites. In some embodiments, sharing the data across service sites can include sharing the data with one or more other shops. In some embodiments, sharing the data across vehicle service sites can improve historical data.

In some embodiments, a method can include receiving vehicle data and one or more of a customer complaint or technician finding. The vehicle data or technician findings can include edge telemetry from one or more of a bay, a technician, or a tool. The vehicle data or technician findings also can include one or more of a repair order or a shop schedule. The vehicle data can include the type of vehicle, or the year, make, or model of the vehicle. The method also can include generating a complaint-finding signature. The complaint-finding signature can be based on the vehicle data, the condition of the vehicle, and the one or more of the customer complaint or the technician finding. The method further can include searching historical data for one or more cases similar to the complaint-finding signature. The historical data can include local data or global data from different shops. The historical data can include outcome data. The outcome data can include on time in full (OTIF), installation time, or comebacks. The similar cases can be based on a candidate or associated parts identified for the vehicle. The method further can include determining a success likelihood based on one or more of the year, make, model, or parts identified for the vehicle. The method of further can include collecting shop constraints. Shop constraints can include technician availability, tooling availability, part availability, pricing, and supplier data to determine one or more of fitment, estimated repair time, technician efficiency, limits for a tool or bay, cost, scheduling, or compliance with policy. The method further can include generating a list of candidate parts based on the historical data and the complaint-finding signature. The method further can include generating a sourcing plan based on the list of candidate parts. The sourcing plan can include candidate parts, associated parts, success likelihoods, expected installation times, a confidence level, or rationale. The sourcing plan can require user review if a threshold for the confidence level is not met. The method further can include facilitating placement of an order based on the sourcing plan. The method also can automatically order a part if the threshold for the confidence level is met. The method further can include recording a part forecast. The part forecast can include an estimated delivery window and an actual delivery time. The method further can include tracking an estimated delivery time for the order. The method further can include updating one or more of a shop schedule or a technician schedule based on the estimated delivery time for the order. In some embodiments, the shop schedule or technician schedule can be updated if the estimated delivery window is not met. The method further can include staging parts in the repair facility upon arrival. The method further can include updating one or more of a technician, an owner of the vehicle, or other stakeholder in the event of a delay in the service of the vehicle. The method further can include continuous learning. The continuous learning can include analyzing outcomes or comeback ratios, updating similarity models or complaint-finding signatures, updating a scorecard for a part or a supplier, updating notes on a technician skill, updating part profiles, updating optimization weights, and creating an audit log. The method further can include updating a scorecard for a part or supplier based on the repair outcome.

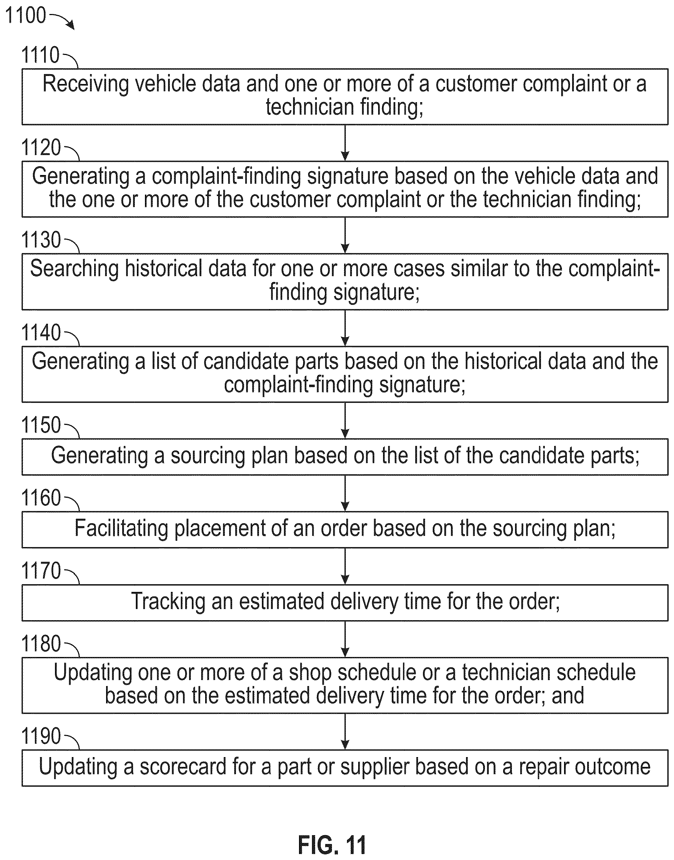

FIG. 11 illustrates a flow chart for a method 1100 according to certain embodiments. Method 1100 is merely exemplary and is not limited to the embodiments presented herein. Method 1100 can be employed in many different embodiments or examples not specifically depicted or described herein. In some embodiments, the steps of method 1100 can be performed in the order presented. In other embodiments, the steps of method 1100 can be performed in any suitable order. In still other embodiments, one or more of the steps of method 1100 can be combined or skipped. In many embodiments, vehicle service system 100 and/or site controller application 115 as shown in FIGs. 1-4 can be configured to perform method 1100 and/or one or more of the steps of method 1100. In these or other embodiments, one or more of the steps of method 1100 can be implemented as one or more computer instructions configured to run at one or more processing device(s) 102 and configured to be stored at one or more non-transitory computer storage devices 101. Such non-transitory memory storage devices 101 can be part of a computer system such as vehicle service system 100 and/or edge device 110. The processing device(s) 102 can be similar or identical to the processing device(s) 102 described above with respect to vehicle service system 100 and/or edge device 110.

Method 1100 of FIG. 11 can include a step 1110 of receiving vehicle data and one or more of a customer complaint or a technician finding. The vehicle data or technician findings can include edge telemetry from one or more of a bay, a technician, or a tool. The vehicle data or technician finding also can include results of a diagnosis process 606 (FIG. 7). The vehicle data or technician findings also can include one or more of a repair order or a shop schedule. The vehicle data can include the type of vehicle, or the year, make, or model of the vehicle. The customer complaint can include a description provided by the customer to a service advisor.

Method 1100 of FIG. 11 can include a step 1120 of generating a complaint-finding signature based on the vehicle data and the one or more of the customer complaint or the technician finding. The complaint-finding signature can be used to query historical data for similar cases. The complaint-finding signature can represent a case in the historical data.

Method 1100 of FIG. 11 can include a step 1130 of searching historical data for one or more cases similar to the complaint-finding signature. Similar case can include those with the same or similar year, make, model, part, supplier, or repair diagnosis. The complaint-finding signature can be used to filter for similar cases within the historical data.

Method 1100 of FIG. 11 can include a step 1140 of generating a list of candidate parts based on the historical data and the complaint-finding signature. The complaint-finding signature can be based on one or more of vehicle data, a customer complaint, or technician findings. The list of candidate parts can be created based on parts that have successfully been used in similar cases in the past. The list of candidate parts also can be created based on delivery times, technician skill in installing the candidate part, cost, customer preference, or shop preference. Method 1100 also can include ranking one or more parts on the list of the candidate parts based on one or more of shop constraints, supplier data, fitment, success likelihoods, the historical data, or the estimated delivery time for a part. The list of candidate parts can be created by performing a global historical similarity search on prior cases across one or more shops. The prior cases can be represented by a complaint-finding signature. The complaint-finding signature can be updated based on outcomes of a repair or other shop visit, success likelihoods, or comeback ratios. Using the complaint-finding signature to generate the list of candidate parts can provide consistent, auditable, and explainable part recommendation decisions. The comeback ratio for a part or a supplier can include a percentage of vehicles that return for the same or related issue after the repair. In some embodiments, the list of candidate parts can be generated using local data only from the same repair shop that is working on the repair.

Method 1100 of FIG. 11 can include a step 1150 of generating a sourcing plan based on the list of candidate parts. The sourcing plan can include how one or more of the candidate parts will be brought to the site of the repair or replacement. The sourcing plan can be created based on availability, supplier rating, delivery times, technician skill in installing the candidate part, cost, customer preference, shop preference, shop workload, historical data, or a complaint-finding signature. Using the complaint-finding signature to generate the sourcing plan can provide consistent, auditable, and explainable sourcing decisions. In some cases, a longer lead time part may be sourced if the shop has a heavy workload. In some cases, a shorter lead time part may be sourced if the shop has a lighter workload. Method 1100 also can include generating a confidence level for the sourcing plan based on one or more of shop constraints, supplier data, fitment, success likelihoods, the historical data, or the estimated delivery time for the part. Method 1100 also can include prompting a user to review the sourcing plan if the confidence level is below a threshold. In some embodiments, generating the sourcing plan can include analyzing live shop telemetry comprising one or more of bay occupancy, technician skill, technician availability, or tool usage. In some embodiments, the historical data can include global data from a plurality of shops.

Method 1100 of FIG. 11 can include a step 1160 of facilitating placement of an order based on the sourcing plan. In some embodiments, the method of operating the shop can require a user to review the sourcing plan if a threshold for the confidence level is not met. In some embodiments, the method of operating the shop can automatically order a part if the sourcing plan meets the threshold for the confidence level. In some embodiments, the vehicle part identified by the sourcing plan or function can be ordered by one or more third party suppliers. In some embodiments, the vehicle part identified by the sourcing plan or function can be available and processed in-house. In some embodiments, facilitating placement of the order based on the sourcing plan also can include facilitating placement of a back-up order based on one or more of the sourcing plan or an updated sourcing plan.

Method 1100 of FIG. 11 can include a step 1170 of tracking an estimated delivery time for the order. In some embodiments, the tracking of the estimated delivery time can be used to determine whether a back-up part needs to be ordered. In some cases, the back-up part will be ordered if there is a delay in the estimated delivery time that could effect the productivity of the shop or a technician. In some embodiments, a repair can be reslotted with a different technician, service bay, or repair time if the estimated delivery time is delayed.

Method 1100 of FIG. 11 can include a step 1180 of updating one or more of a shop schedule or a technician schedule based on the estimated delivery time for the order. In some embodiments, the shop schedule or technician schedule can be updated to prioritize another job based on a delay or an improvement in the estimated delivery time for the order.

Method 1100 of FIG. 11 can include a step 1190 of updating a scorecard for a part or supplier based on a repair outcome. In some embodiments, the scorecard for a part or supplier can be updated based on a comparison of the actual delivery time and the estimated delivery time.

Embodiments may include a computer program product accessible from a computer-usable or computer-readable medium providing program code for use by or in connection with a computer or any instruction execution system. A computer-usable or computer-readable medium may include any apparatus that stores, communicates, propagates, or transports the program for use by or in connection with the instruction execution system, apparatus, or device. The medium can be a magnetic, optical, electronic, electromagnetic, infrared, or semiconductor system (or apparatus or device) or a propagation medium. The medium may include a computer-readable storage medium, such as a semiconductor or solid-state memory, magnetic tape, a removable computer diskette, a random access memory (RAM), a read-only memory (ROM), a rigid magnetic disk and an optical disk, etc.

A data processing system suitable for storing and/or executing program code may include at least one processor coupled directly or indirectly to memory elements through a system bus. The memory elements can include local memory employed during actual execution of the program code, bulk storage, and cache memories that provide temporary storage of at least some program code to reduce the number of times code is retrieved from bulk storage during execution. Input/output or I/O devices (including but not limited to keyboards, displays, pointing devices, etc.) may be coupled to the system either directly or through intervening I/O controllers.

Network adapters may also be coupled to the system to enable the data processing system to become coupled to other data processing systems or remote printers or storage devices through intervening private or public networks. Modems, cable modems, and Ethernet cards are just a few of the currently available types of network adapters.

It should be recognized that any features and/or functionalities described for an embodiment in this application can be incorporated into any other embodiment mentioned in this disclosure. Moreover, the embodiments described in this disclosure can be combined in various ways. Additionally, while the description herein may describe certain embodiments, features, or components as being implemented in software or hardware, it should be recognized that any embodiment, feature, or component that is described in the present application may be implemented in hardware, software, or a combination of the two.

While various novel features of the invention have been shown, described, and pointed out as applied to particular embodiments thereof, it should be understood that various omissions and substitutions, and changes in the form and details of the systems and methods described and illustrated, may be made by those skilled in the art without departing from the spirit of the invention. Amongst other things, the steps in the methods may be carried out in different orders in many cases where such may be appropriate. Those skilled in the art will recognize, based on the above disclosure and an understanding of the teachings of the invention, that the particular hardware and devices that are part of the system described herein, and the general functionality provided by and incorporated therein, may vary in different embodiments of the invention. Accordingly, the description of system components are for illustrative purposes to facilitate a full and complete understanding and appreciation of the various aspects and functionality of particular embodiments of the invention as realized in system and method embodiments thereof. Those skilled in the art will appreciate that the invention can be practiced in other than the described embodiments, which are presented for purposes of illustration and not limitation. Variations, modifications, and other implementations of what is described herein may occur to those of ordinary skill in the art without departing from the spirit and scope of the present invention and its claims.

## Claims

1. A computer-implemented method comprising:
receiving a service request for a vehicle;
analyzing the vehicle, comprising:
identifying a type of the vehicle;
identifying a condition of the vehicle; and
comparing the type of the vehicle and the condition of the vehicle to historical data to generate comparison information;
generating a sourcing plan, wherein generating the sourcing plan comprises:
identifying one or more vehicle parts used for the service request based at least on the comparison information; and
executing an automated sourcing function to source the one or more vehicle parts used for the service request; and
facilitating an order for the one or more vehicle parts as identified.

2. The computer-implemented method of claim 1, further comprising one or more of:
identifying, using a camera, one or more of the type of the vehicle, a first location of the vehicle, or a second location of the vehicle;
determining, using a tag reader, an availability of equipment;
determining a location of a technician;
optimizing the location of the technician based on one or more of a skill of the technician or a relative service need;
identifying a customer profile associated with the vehicle, wherein the customer profile provides:
a level of flexibility of a customer for a service completion time; and
a history of past services received by the vehicle or the customer;
providing delivery tracking information for a delivery of the one or more vehicle parts or equipment;
monitoring a deviation from an expected delivery date;
prompting an update to a shop schedule based on the deviation from the expected delivery date; or
recommending the one or more vehicle parts based on one or more of a geographical location of the vehicle, a cost of the one or more vehicle parts or equipment, or a lead time for the one or more vehicle parts or the equipment.

3. A system comprising one or more processors and one or more non-transitory computer-readable media storing computing instructions that, when executed on the one or more processors, cause the one or more processors to perform operations comprising:
receiving a service request for a vehicle;
analyzing the vehicle, comprising:
identifying a type of the vehicle;
identifying a condition of the vehicle;
comparing the type of the vehicle and the condition of the vehicle to historical data to generate comparison information;
generating a sourcing plan, wherein generating the sourcing plan comprises:
identifying one or more vehicle parts used for the service request based at least on the comparison information; and
executing an automated sourcing function to source the one or more vehicle parts used for the service request; and
facilitating an order to obtain the one or more vehicle parts as identified.

4. One or more non-transitory computer-readable media comprising computing instructions that, when executed on one or more processors, cause the one or more processors to perform operations comprising:
receiving a service request for a vehicle;
analyzing the vehicle, comprising:
identifying a type of the vehicle;
identifying a condition of the vehicle;
comparing the type of the vehicle and the condition of the vehicle to historical data to generate comparison information;
generating a sourcing plan, wherein generating the sourcing plan comprises:
identifying one or more vehicle parts used for the service request based at least on the comparison information; and
executing an automated sourcing function to source the one or more vehicle parts used for the service request; and
facilitating an order for the one or more vehicle parts as identified.

5. A computer-implemented method comprising:
connecting, over a network, an edge device located at a vehicle service site to a centralized vehicle service cloud platform, the edge device executing a site controller application configured to track and manage operations at the vehicle service site;
configuring one or more IoT devices located at the vehicle service site to capture monitoring data corresponding to service bay usage, equipment, vehicle parts, and technicians located at the vehicle service site;
receiving, at the edge device from the IoT devices, the monitoring data for usage by the site controller application;
receiving, by the site controller application executed by the edge device, a service request for a vehicle at the vehicle service site;
generating a schedule for the vehicle service site based at least on the monitoring data received from the IoT devices, wherein the generating the schedule for the vehicle service site comprises one or more of:
generating a schedule for a specific technician;
storing, by the site controller application, one or more of site layout information, technician information, or service request information;
dynamically adjusting the schedule in real-time;
generating a signature for the vehicle based on one or more of the monitoring data or information entered by a user in a complaint;
retrieving cases that are similar to the service request; or
providing outputs based on one or more of the complaint, the monitoring data, or the cases that are similar to the service request; and
dynamically updating the schedule for the vehicle service site based on updates to the monitoring data.

6. A system comprising one or more processors and one or more non-transitory computer-readable media storing computing instructions that, when executed on the one or more processors, cause the one or more processors to perform operations comprising:
connecting, over a network, an edge device located at a vehicle service site to a centralized vehicle service cloud platform, the edge device executing a site controller application configured to track and manage operations at the vehicle service site;
configuring one or more IoT devices located at the vehicle service site to capture monitoring data corresponding to service bay usage, equipment, vehicle parts, and technicians located at the vehicle service site;
receiving, at the edge device from the IoT devices, the monitoring data for usage by the site controller application;
receiving, by the site controller application executed by the edge device, a service request for a vehicle at the vehicle service site;
generating a schedule for the vehicle service site based at least on the monitoring data received from the IoT devices; and
dynamically updating the schedule for the vehicle service site based on updates to the monitoring data.

7. One or more non-transitory computer-readable media comprising computing instructions that, when executed on one or more processors, cause the one or more processors to perform operations comprising:
connecting, over a network, an edge device located at a vehicle service site to a centralized vehicle service cloud platform, the edge device executing a site controller application configured to track and manage operations at the vehicle service site;
configuring one or more IoT devices located at the vehicle service site to capture monitoring data corresponding to service bay usage, equipment, vehicle parts, and technicians located at the vehicle service site;
receiving, at the edge device from the IoT devices, the monitoring data for usage by the site controller application;
receiving, by the site controller application executed by the edge device, a service request for a vehicle at the vehicle service site;
generating a schedule for the vehicle service site based at least on the monitoring data received from the IoT devices; and
dynamically updating the schedule for the vehicle service site based on updates to the monitoring data.

8. A computer-implemented method comprising:
collecting information for a service request for a vehicle;
performing a diagnostic test to identify a problem with the vehicle;
providing a recommendation based on the problem with the vehicle, the information as collected, and historical data;
detecting one or more of people, vehicles, parts, tools, or equipment located in a service bay;
detecting a duration of use of one or more of the people, the vehicles, the parts, the tools, or the equipment used to service the vehicle;
detecting a type of service being performed on the vehicle;
categorizing the vehicle as one or more of a damaged vehicle or a repaired vehicle;
storing data comprising one or more of the information as collected, the people, the vehicles, the parts, the tools, or the equipment to append the historical data; and
sharing the data across vehicle service sites.

9. The computer-implemented method of claim 8, further comprising one or more of:
determining a location of a replacement part available to service the vehicle;
executing facial recognition to detect the people in the service bay;
detecting one or more of an unusual behavior, a malfunction, or a safety hazard in the service bay;
estimating a time remaining to service the vehicle;
determining whether a recall has been issued for the vehicle;
increasing a diagnosis level for the vehicle based on an existence of the recall;
determining a subject matter of the recall; or
conducting a diagnosis process relating to the subject matter of the recall.

10. A system comprising one or more processors and one or more non-transitory computer-readable media storing computing instructions that, when executed on the one or more processors, cause the one or more processors to perform operations comprising:
collecting information for a service request for a vehicle;
performing a diagnostic test to identify a problem with the vehicle;
providing a recommendation based on the problem with the vehicle, the information as collected, and historical data;
detecting one or more of people, vehicles, parts, tools, or equipment located in a service bay;
detecting a duration of use of one or more of the people, the vehicles, the parts, the tools, or the equipment used to service the vehicle;
detecting a type of service being performed on the vehicle;
categorizing the vehicle as one or more of a damaged vehicle or a repaired vehicle;
storing data comprising one or more of the information as collected, the people, the vehicles, the parts, the tools, or the equipment to append the historical data; and
sharing the data across vehicle service sites.

11. One or more non-transitory computer-readable media comprising computing instructions that, when executed on one or more processors, cause the one or more processors to perform operations comprising:
collecting information for a service request for a vehicle;
performing a diagnostic test to identify a problem with the vehicle;
providing a recommendation based on the problem with the vehicle, the information as collected, and historical data;
detecting one or more of people, vehicles, parts, tools, or equipment located in a service bay;
detecting a duration of use of one or more of the people, the vehicles, the parts, the tools, or the equipment used to service the vehicle;
detecting a type of service being performed on the vehicle;
categorizing the vehicle as one or more of a damaged vehicle or a repaired vehicle;
storing data comprising one or more of the information as collected, the people, the vehicles, the parts, the tools, or the equipment to append the historical data; and
sharing the data across vehicle service sites.

12. A computer-implemented method comprising:
receiving vehicle data and one or more of a customer complaint or a technician finding;
generating a complaint-finding signature based on the vehicle data and the one or more of the customer complaint or the technician finding;
searching historical data for one or more cases similar to the complaint-finding signature;
generating a list of candidate parts based on the historical data and the complaint-finding signature;
generating a sourcing plan based on the list of the candidate parts;
facilitating placement of an order based on the sourcing plan;
tracking an estimated delivery time for the order;
updating one or more of a shop schedule or a technician schedule based on the estimated delivery time for the order; and
updating a scorecard for a part or supplier based on a repair outcome.

13. The computer-implemented method of claim 12, further comprising one or more of:
ranking one or more parts on the list of the candidate parts based on one or more of shop constraints, supplier data, fitment, success likelihoods, the historical data, or the estimated delivery time for a part;
generating a confidence level for the sourcing plan based on one or more of shop constraints, supplier data, fitment, success likelihoods, the historical data, or the estimated delivery time for the part;
prompting a user to review the sourcing plan if the confidence level is below a threshold; or
facilitating placement of a back-up order based on one or more of the sourcing plan or an updated sourcing plan.

14. A system comprising one or more processors and one or more non-transitory computer-readable media storing computing instructions that, when executed on the one or more processors, cause the one or more processors to perform operations comprising:
receiving vehicle data and one or more of a customer complaint or a technician finding;
generating a complaint-finding signature based on the vehicle data and the one or more of the customer complaint or the technician finding;
searching historical data for one or more cases similar to the complaint-finding signature;
generating a list of candidate parts based on the historical data and the complaint-finding signature;
generating a sourcing plan based on the list of the candidate parts;
facilitating placement of an order based on the sourcing plan;
tracking an estimated delivery time for the order;
updating one or more of a shop schedule or a technician schedule based on the estimated delivery time for the order; and
updating a scorecard for a part or supplier based on a repair outcome.

15. One or more non-transitory computer-readable media comprising computing instructions that, when executed on one or more processors, cause the one or more processors to perform operations comprising:
receiving vehicle data and one or more of a customer complaint or a technician finding;
generating a complaint-finding signature based on the vehicle data and one or more of the customer complaint or the technician finding;
searching historical data for one or more cases similar to the complaint-finding signature;
generating a list of candidate parts based on the historical data and the complaint-finding signature;
generating a sourcing plan based on the list of the candidate parts;
facilitating placement of an order based on the sourcing plan;
tracking an estimated delivery time for the order;
updating one or more of a shop schedule or a technician schedule based on the estimated delivery time for the order; and
updating a scorecard for a part or supplier based on a repair outcome.
